# EUROPEAN PATENT APPLICATION

(11) **EP 4 773 695 A1**
(43) Date of publication of application: **08.07.2026**
(21) Application number: 24883912.8
(22) Date of filing: 04.06.2024
(51) Int. Cl.: H04W 72/11

(54) **METHOD FOR DETERMINING PARAMETERS OF SPS CONFIGURATION, AND DEVICE AND STORAGE MEDIUM**

(30) Priority: 30.10.2023 CN 202311435731
(71) Applicant: ZTE Corporation, Shenzhen, Guangdong Province 518057 (CN)
(72) Inventor: GOU, Wei, Shenzhen, Guangdong 518057 (CN); HAN, Xianghui, Shenzhen, Guangdong 518057 (CN); WEI, Xingguang, Shenzhen, Guangdong 518057 (CN); KOU, Shuaihua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/097215
(87) International publication number: WO 2025/091901

(57) **Abstract**

Disclosed in the embodiments of the present application are a method for determining the parameters of an SPS configuration, and a device and a storage medium. The method comprises: in response to an SPS configuration, a device determining two parameter values for one or more parameter types in the SPS configuration, wherein the parameter types in the SPS configuration comprise: time-domain resource assignment (TDRA), a modulation and coding scheme (MCS), frequency-domain resource assignment (FDRA), a mapping mode from a virtual resource block (VRB) to a physical resource block (PRB), a transmission power control command (TPC), and a timing interval from a transmission channel to HARQ-ACK.

## Description

### CROSS REFERENCE TO RELATED APPLICATIONS

This application claims priority to Chinese Patent Application No. 202311435731.4 filed on October 30, 2023, entitled "METHOD FOR DETERMINING PARAMETERS OF SPS CONFIGURATION, AND DEVICE AND STORAGE MEDIUM", the entirety of which is incorporated herein by reference.

### TECHNICAL FIELD

The embodiments of the present application relate to the field of communication technology, in particular to a method for determining the parameters of an SPS configuration, and a device and a storage medium.

### BACKGROUD

For a Semi-Persistent Scheduling (SPS) transmission, various parameters need to be configured to support its execution. In the prior art, each parameter in an SPS configuration has only one assigned value. However, when two transmissions of the same SPS configuration occur in symbols corresponding to different symbol types, where channel conditions may vary significantly between these symbol types, the current SPS configuration can no longer meet the transmission requirements.

### SUMMARY

The embodiments of the present application provide a method for determining the parameters of an SPS configuration, and a device and a storage medium, in which at least one parameter in the SPS configuration is assigned two parameter values to accommodate different technical requirements.

In order to achieve the aforementioned object, the embodiments of the present application disclose a method for determining the parameters of an SPS configuration, the method includes: in response to an SPS configuration, a device determining two parameter values for one or more parameter types in the SPS configuration, wherein the parameter types in the SPS configuration include: time-domain resource assignment (TDRA), a modulation and coding scheme (MCS), frequency-domain resource assignment (FDRA), a mapping mode from a virtual resource block (VRB) to a physical resource block (PRB), a transmission power control command (TPC), and a timing interval from a transmission channel to HARQ-ACK.

**In** order to achieve the aforementioned object, the embodiments of the present application disclose a computer device including a memory, a processor, and a computer program stored on the memory and executable on the processor, the processor, when executing the program, implements the method for determining the parameters of an SPS configuration according to the embodiments of the present application.

**In** order to achieve the aforementioned object, the embodiments of the present application disclose a computer-readable storage medium storing a computer program that, when executed by a processor, implements the method for determining the parameters of an SPS configuration according to the embodiments of the present application.

### BRIEF DESCRIPTION OF THE DRAWINGS

FIG. 1 is a flow chart of a method for determining the parameters of an SPS configuration disclosed in an embodiment of the present application;
FIG. 2 is a schematic structural diagram of a device for determining the parameters of an SPS configuration disclosed in an embodiment of the present application;
FIG. 3 is a schematic structural diagram of an electronic device disclosed in an embodiment of the present application.

### DETAILED DESCRIPTION

In order to clarify the objects, technical solutions and advantages of the present application, the embodiments of the present application will be illustrated in detail below in conjunction with accompanying drawings. It should also be noted that, in the absence of conflict, the embodiments of the present application and features in the embodiments may be arbitrarily combined with each other.

It should be understood that the specific embodiments described here are merely used to illustrate the present application and not intended to be limiting.

In the subsequent description, the suffixes such as "module", "component" or "unit" used to represent elements are only used to facilitate the description of the present application, and have no special meanings. Therefore, "module", "component" or "unit" can be used in a mixed manner.

In order to improve uplink (UL) coverage, UL latency, and UL capacity in a Time Division Duplexing (TDD) system, subband full duplex (SBFD) technology has been proposed. SBFD subbands may be configured in downlink (DL) symbols/DL slots and F symbols/F slots. SBFD subbands typically include UL subbands and DL subbands; generally, UL subbands are used for UL transmission, and DL subbands are used for DL transmission. DL subbands and UL subbands are configured on a Resource Block (RB) basis. Symbols configured with SBFD subbands are referred to as SBFD symbols, and slots containing SBFD symbols are referred to as SBFD slots. Symbols not configured with SBFD subbands are referred to as non-SBFD symbols (that is, conventional DL symbols), and slots that do not contain SBFD symbols are referred to as non-SBFD slots.

For repetitive or periodic UL transmissions and DL receptions, if the UE is aware of the configuration of SBFD symbols/slots, the following transmission modes can be supported:
Option 1: The UL transmission/DL reception is performed only in either SBFD symbols or non-SBFD symbols. That is, all UL transmissions/DL receptions of a given UL transmission/DL reception are performed exclusively in SBFD symbols or exclusively in non-SBFD symbols. For example: the first UL transmission/DL reception of a given UL transmission/DL reception is performed in a certain type of symbols (such as SBFD symbols or non-SBFD symbols), and the second UL transmission/DL reception is performed in the same type of symbols.
Option 2: The UL transmission/DL reception can be performed in both SBFD symbols and non-SBFD symbols. That is, different UL transmissions/DL receptions of a given UL transmission/DL reception can be performed in both SBFD symbols and non-SBFD symbols. For example, the first UL transmission/DL reception of a given UL transmission/DL reception is performed in a SBFD symbols (or non-SBFD symbols), and the second UL transmission/DL reception is performed in non-SBFD symbols (or SBFD symbols).

Furthermore, the aforementioned Option 1 may be further divided into two sub-options:
Option 1-1: The UL transmission/DL reception is performed only in SBFD symbols. That is, all UL transmissions/DL receptions of a given UL transmission/DL reception are performed exclusively in SBFD symbols. For example, the first UL transmission/DL reception is performed in SBFD symbols, and the second UL transmission/DL reception is also performed in SBFD symbols.
Option 1-2: The UL transmission/DL reception is performed only in non-SBFD symbols. That is, all UL transmissions/DL receptions of a given UL transmission/DL reception are performed exclusively in non-SBFD symbols. For example, the first UL transmission/DL reception is performed in non-SBFD symbols, and the second UL transmission/DL reception is also performed in non-SBFD symbols.

The aforementioned UL transmissions and DL receptions include at least one of the following: PDSCH/PUSCH/PUCCH repetition, SPS PDSCH/CG PUSCH, TBoMS, Multi-PUSCH/PDSCH scheduled by a single DCI, Periodic/semi-persistent SRS/CSI-RS/PUCCH or PDCCH.

Based on the foregoing introduction, in order to further improve system efficiency and spectral efficiency, the present application proposes Co-frequency Co-time Full Duplex (CCFD) operations. Firstly, the configuration of CCFD resources is proposed:
Within a carrier, the base station configures, based on contiguous RBs, a set of RBs for CCFD operation in the frequency domain, and configures, based on symbols or slots, some slots or symbols for CCFD operation in the time domain. In this way, some time-frequency resources for CCFD operation (denoted as Resource A) may be obtained. At least from the base station side, Resource A may be used for co-frequency co-time full duplex. That is, the base station may use the same time and the same frequency to simultaneously transmit DL signals and receive UL signals in Resource A.

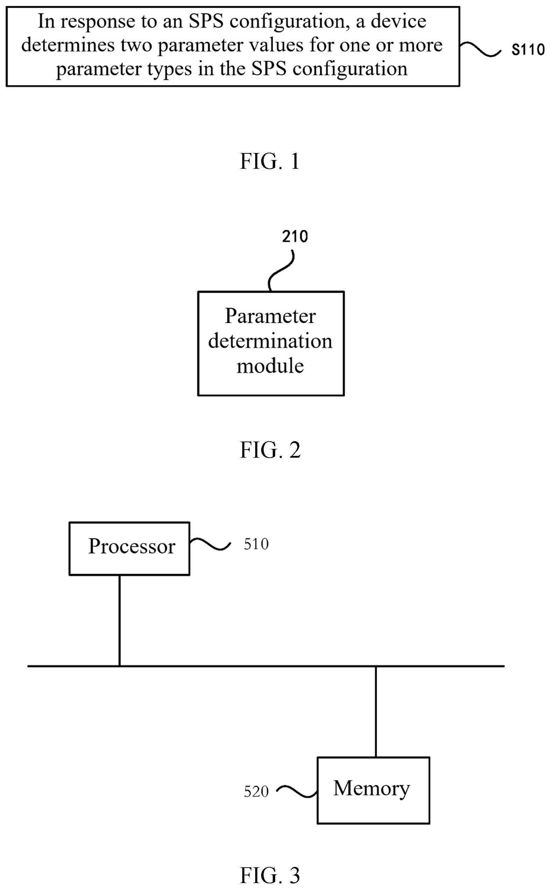

In the present application, symbols/slots configured with Resource A are referred to as CCFD symbols/slots, while symbols/slots not configured with Resource A are referred to as non-CCFD symbols/slots (for example, conventional symbols/slots). Illustratively, FIG. 3 is an exemplary diagram of time-frequency resources for CCFD operation in an embodiment of the present application.

Due to the different channel interference environments in CCFD symbols and non-CCFD symbols, there is a significant performance difference between UL transmissions/DL receptions in CCFD symbols/slots and those in non-CCFD symbols/slots, as a result, the following transmission modes are introduced to support repetitive or periodic DL transmissions and DL receptions.

Option 1A: The UL transmission/DL reception is performed only in either CCFD symbols or non-CCFD symbols. That is, all UL transmissions/DL receptions of a given UL transmission/DL reception are performed exclusively in CCFD symbols or exclusively in non-CCFD symbols. For example: the first UL transmission/DL reception of a given UL transmission/DL reception is performed in a certain type of symbols (such as CCFD symbols or non-CCFD symbols), and the second UL transmission/DL reception is performed in the same type of symbols.

Option 2A: The UL transmission/DL reception can be performed in both CCFD symbols and non-CCFD symbols. That is, different UL transmissions/DL receptions of a given UL transmission/DL reception can be performed in both CCFD symbols and non-CCFD symbols. For example, the first UL transmission/DL reception of a given UL transmission/DL reception is performed in a CCFD symbols (or non-CCFD symbols), and the second UL transmission/DL reception is performed in non-CCFD symbols (or CCFD symbols).

Furthermore, the aforementioned Option 1A may be further divided into two sub-options:
Option 1A-1: The UL transmission/DL reception is performed only in CCFD symbols. That is, all UL transmissions/DL receptions of a given UL transmission/DL reception are performed exclusively in CCFD symbols. For example, the first UL transmission/DL reception is performed in CCFD symbols, and the second UL transmission/DL reception is also performed in CCFD symbols.
Option 1A-2: The UL transmission/DL reception is performed only in non-CCFD symbols. That is, all UL transmissions/DL receptions of a given UL transmission/DL reception are performed exclusively in non-CCFD symbols. For example, the first UL transmission/DL reception is performed in non-CCFD symbols, and the second UL transmission/DL reception is also performed in non-CCFD symbols.

The aforementioned UL transmissions and DL receptions include at least one of the following: PDSCH/PUSCH/PUCCH repetition, SPS PDSCH/CG PUSCH, TBoMS, a plurality of PUSCHs/PDSCHs scheduled by a single DCI, and periodic/semi-persistent SRS/CSI-RS/PUCCH or PDCCH.

In the present application, semi-persistent PDSCH (SPS PDSCH) transmission is used as an example to describe channel/signal configuration methods and corresponding reception methods based on SBFD or CCFD. It also applies to channel/signal configuration methods and corresponding reception methods based on CCFD. It may be applied to other channels, such as PDSCH/PUSCH/PUCCH repetitions, CG PUSCH, TBoMS, Multi-PUSCH/PDSCH scheduled by a single DCI, Periodic/semi-persistent SRS/CSI-RS/PUCCH, and PDCCH.

The following method is described primarily focusing on transmissions/receptions based on SBFD subbands. It may also be applied to transmissions/receptions based on CCFD, for example by replacing SBFD symbols/slots with CCFD symbols/slots and replacing non-SBFD symbols/slots with non-CCFD symbols/slots.

Correspondingly, the transmission modes based on SBFD may also be replaced with the transmission modes based on CCFD, for example by replacing the aforementioned option 1 with the aforementioned option 1A, by replacing the aforementioned option 2 with the aforementioned option 2A, by replacing the aforementioned option 1-1 with the aforementioned option 1A-1, and by replacing the aforementioned option 1-2 with the aforementioned option 1A-2.

In the prior art, a transmission configuration requires a plurality of parameters to be configured to support the execution of the transmission corresponding to that configuration. For example, if a transmission configuration is an SPS configuration, then the following parameters are required for the execution of that SPS configuration: Frequency Domain Resource Assignment (FDRA), Time Domain Resource Assignment (TDRA), Modulation and Coding Scheme (MCS), TPC command for scheduled PUCCH, PDSCH-to-HARQ_feedback timing indicator, and VRB-to-PRB mapping. In the prior art, the aforementioned parameters are included in the DCI used to activate the SPS configuration. Furthermore, the activating DCI also contains a Downlink Assignment Index (DAI) and a PUCCH resource indicator (PRI). However, in the prior art, for an SPS configuration, there is only one set of values for the aforementioned parameters.

However, in actual transmission configurations, different transmissions corresponding to the same transmission configuration can be performed in different slots by utilizing SBFD symbols and non-SBFD symbols. For example, assume that a transmission configuration is an SPS configuration, the period of this SPS configuration is 2 slots, and the SPS configuration is determined to support the aforementioned Option 2, then, at the first transmission occasion of this SPS configuration, one SPS PDSCH of this SPS configuration is performed in SBFD symbols, while at the second transmission occasion, another SPS PDSCH of this SPS configuration is performed in non-SBFD symbols. Clearly, the two transmissions of this SPS configuration occur in symbols corresponding to different symbol types, based on the foregoing analysis, the channel conditions in SBFD symbols differ significantly from those in non-SBFD symbols (with substantial interference differences). Therefore, the present application recommends that for transmissions of this SPS configuration in the two symbol types, corresponding parameters should be considered separately. For example, each of the aforementioned plurality of parameters requires two corresponding parameter values, one parameter is used for transmissions in SBFD symbols, and the other parameter is used for transmissions in non-SBFD symbols. For example, for the MCS parameter, two MCS parameters are required, one MCS parameter is used for SPS PDSCH transmissions in SBFD symbols, and the other MCS parameter is used for SPS PDSCH transmissions in non-SBFD symbols.

Furthermore, in order to achieve two parameter values for each of the aforementioned plurality of parameters, the following approaches are proposed. Using the following approaches, corresponding parameters may be determined for different transmissions of a transmission configuration when those transmissions occur in different types of symbols. For example, if a transmission configuration is determined to perform transmissions based on the aforementioned Option 2, based on methods below, the transmission configuration may obtain parameters associated with different symbol types (for example, parameters used for transmissions in SBFD symbols and parameters used for transmissions in non-SBFD symbols). Ultimately, different transmissions of the transmission configuration use the parameters corresponding to the respective symbol types to perform their transmissions in SBFD symbols and non-SBFD symbols.

The same situation applies equally to CCFD symbols and non-CCFD symbols. For example, if a transmission configuration is determined to perform transmissions based on the aforementioned Option 2A, similarly, based on methods below, the transmission configuration may obtain transmission parameters associated with different symbol types (for example, parameters used for transmissions in CCFD symbols and parameters used for transmissions in non-CCFD symbols). Ultimately, different transmissions of the transmission configuration use the parameters corresponding to the respective symbol types to perform their transmissions in CCFD symbols and non-CCFD symbols.

In related art, for DCI formats used for downlink unicast transmissions, DCI includes a plurality of DCI formats. Different DCI formats have different size requirements. The DCI format 1-0 has a compact and fixed size. In DCI 1-0, the size of each parameter is fixed, and the presence or absence of each parameter as well as its size cannot be configured by Radio Resource Control (RRC) signaling. DCI 1-0 may be used in scenarios where RRC signaling is ambiguous or channel conditions are poor. Thus, if a new parameter is added to DCI 1-0, such an approach would be unacceptable because it would cause a change in the size of DCI 1-0. For DCI formats 1-1 or 1-2, their sizes are larger and may vary. For example, the sizes of the parameters included therein may be configured by RRC signaling. The presence or absence of each parameter in DCI 1-1 and DCI 1-2 may also be configured by RRC signaling. DCI formats used for downlink unicast transmissions may be used to activate a SPS configuration for unicast.

In related art, for DCI formats used for uplink unicast transmissions, DCI includes a plurality of DCI formats. Different DCI formats have different size requirements. The DCI format 0-0 has a compact and fixed size. In DCI 0-0, the size of each parameter is fixed, and the presence or absence of each parameter as well as its size cannot be configured by RRC signaling. DCI 0-0 may be used in scenarios where RRC signaling is ambiguous or channel conditions are poor. Thus, if a new parameter is added to DCI 0-0, such an approach would be unacceptable because it would cause a change in the size of DCI 0-0. For DCI formats 0-1 or 0-2, their sizes are larger and may vary. For example, the sizes of the parameters included therein may be configured by RRC signaling. The presence or absence of each parameter in DCI 0-1 and DCI 0-2 may also be configured by RRC signaling. DCI formats used for uplink unicast transmissions may be used to activate a CG PUSCH configuration for unicast.

In related art, for DCI formats used for multicast transmissions, DCI includes a plurality of DCI formats. Different DCI formats have different size requirements. The DCI format 4-1 has a compact and fixed size. In DCI 4-1, the size of each parameter is fixed, and the presence or absence of each parameter as well as its size cannot be configured by RRC signaling. DCI 4-1 may be used in scenarios where RRC signaling is ambiguous or channel conditions are poor. Thus, if a new parameter is added to DCI 4-1, such an approach would be unacceptable because it would cause a change in the size of DCI 4-1. For DCI format 4-2, their sizes are larger and may vary. For example, the sizes of the parameters included therein may be configured by RRC signaling. The presence or absence of each parameter in DCI 4-2 may also be configured by RRC signaling. DCI formats used for downlink multicast transmissions may be used to activate a SPS configuration for multicast.

FIG. 1 is a flow chart of a method for determining the parameters of an SPS configuration in an embodiment of the present application 1, as shown in FIG. 1, the method includes the following steps:
S110: in response to an SPS configuration, a device determines two parameter values for one or more parameter types in the SPS configuration.

The parameter types in the SPS configuration include: time-domain resource assignment (TDRA), a modulation and coding scheme (MCS), frequency-domain resource assignment (FDRA), a mapping mode from a virtual resource block (VRB) to a physical resource block (PRB), a transmission power control command (TPC), and a timing interval from a transmission channel to HARQ-ACK.

The device may be a base station or user equipment (UE). The base station determines two parameter values for one or more parameter types in the SPS configuration, configures these two parameter values to the UE using the following method, and performs corresponding transmissions or receptions according to the two parameter values. Based on relevant configuration information transmitted by the base station according to the following method, the UE determines two parameter values for one or more parameter types in the SPS configuration, and performs corresponding transmissions or receptions according to the determined two parameter values.

In one embodiment, the manner of determining two parameter values for one or more parameter types in the SPS configuration may be as follows: a TDRA parameter is determined according to physical uplink control channel resource indication (PRI) and/or downlink assignment index (DAI) in downlink control information (DCI) corresponding to the SPS configuration, and the TDRA parameter is associated with either first-type orthogonal frequency division multiplexing (OFDM) symbols or second-type OFDM symbols; an original TDRA parameter in DCI is repurposed to indicate another TDRA parameter, and the TDRA parameter is associated with either second-type OFDM symbols or the first-type OFDM symbols.

Among others, first-type OFDM symbols refers to OFDM symbols configured with first-type resources, and second-type OFDM symbols refer to OFDM symbols which are not configured with first-type resources. The first-type resources include subband full duplex (SBFD) subbands or co-frequency co-time full duplex (CCFD) subbands.

In this embodiment, the PRI and/or DAI in the DCI that is used to activate the SPS configuration is employed to determine a TDRA parameter, and this TDRA parameter is associated with first-type OFDM symbols (or second-type OFDM symbols). The original TDRA parameter in the DCI indicates another TDRA parameter, and this TDRA parameter is associated with second-type OFDM symbols (or first-type OFDM symbols). In this approach, the activated SPS configuration will be associated with two TDRA parameters in the DCI. If a transmission occasion of an SPS PDSCH for this SPS configuration occurs in first-type OFDM symbols, then the TDRA parameter associated with the first-type OFDM symbols is used for the SPS PDSCH. If a transmission occasion of an SPS PDSCH for this SPS configuration occurs in second-type OFDM symbols, then the TDRA parameter associated with the first-type OFDM symbols is used for the SPS PDSCH. Exemplarily, if a UE is configured with SBFD subbands and an SPS configuration based on the aforementioned Option 2, then the base station and the UE agree that the PRI and/or DAI in the DCI that is used to activate the SPS configuration is employed to determine a TDRA parameter, and this TDRA parameter is used when an SPS PDSCH of the SPS configuration is transmitted in SBFD symbols (or in non-SBFD symbols).

Optionally, the manner of determining a TDRA parameter according to the PRI and/or DAI in the DCI corresponding to the SPS configuration may include at least one of the following: the PRI and/or DAI in the DCI corresponding to the SPS configuration indicates a TDRA parameter from a time-domain resource set; or a TDRA parameter from a time-domain resource set is determined according to an offset indicated by the PRI and/or DAI in the DCI corresponding to the SPS configuration.

Here, the offset is an offset with respect to the original TDRA parameter in the DCI. The time-domain resource set is a time-domain resource set corresponding to first-type OFDM symbols, or a time-domain resource set corresponding to second-type OFDM symbols, or a time-domain resource set shared by both the first-type OFDM symbols and the second-type OFDM symbols. Specifically, the manner of determine a TDRA parameter in a time-domain resource set according to the offset indicated by the PRI and/or DAI in the DCI corresponding to the SPS configuration may be as follows: this offset is added to (or subtracted from) the original TDRA parameter in the DCI. The offset may take positive or negative values, and the offset values may be non-contiguous, including equally spaced (for example, {-4, -2, 0, 2, 4, 6}) or non-equally spaced (for example, {-4, -3, 0, 1, 2, 3}) patterns. This approach helps reduce signaling the overhead of the offset, for example, only the PRI is used.

Optionally, if the DCI is used to activate an SPS configuration, the base station and the UE consider that one TDRA parameter indicated by the TDRA parameter in this DCI is used both when an SPS PDSCH of the SPS configuration is transmitted in first-type OFDM symbols and when an SPS PDSCH of the SPS configuration is transmitted in second-type OFDM symbols. Furthermore, the same or different PDSCH time-domain resource sets (or subcarrier spacings, SCS) can be configured for the first-type OFDM symbols and the second-type OFDM symbols.

In one embodiment, the manner of determining two parameters values for one or more parameter types in the SPS configuration may be as follows: a MCS parameter is determined according to PRI and/or DAI in DCI corresponding to the SPS configuration, and the MCS parameter is associated with either first-type OFDM symbols or second-type OFDM symbols; an original MCS parameter in DCI is repurposed to indicate another MCS parameter, and the MCS parameter is associated with either the second-type OFDM symbols or the first-type OFDM symbols.

In this embodiment, the PRI and/or DAI in the DCI that is used to activate the SPS configuration is employed to determine a MCS parameter, and this MCS parameter is associated with first-type OFDM symbols (or second-type OFDM symbols). The original MCS parameter in the DCI indicates another MCS parameter, and this MCS parameter is associated with second-type OFDM symbols (or first-type OFDM symbols). In this approach, the activated SPS configuration will be associated with two MCS parameters in the DCI. If a transmission occasion of an SPS PDSCH for this SPS configuration occurs in first-type OFDM symbols, then the MCS parameter associated with the first-type OFDM symbols is used for the SPS PDSCH. If a transmission occasion of an SPS PDSCH for this SPS configuration occurs in second-type OFDM symbols, then the MCS parameter associated with the first-type OFDM symbols is used for the SPS PDSCH. Exemplarily, if a UE is configured with SBFD subbands and an SPS configuration based on the aforementioned Option 2, then the base station and the UE agree that the PRI and/or DAI in the DCI that is used to activate the SPS configuration is employed to determine a MCS parameter, and this MCS parameter is used when an SPS PDSCH of the SPS configuration is transmitted in SBFD symbols (or in non-SBFD symbols).

Optionally, the manner of determining a MCS parameter according to the PRI and/or DAI in the DCI correspondingly to the SPS configuration includes at least one of the following: the PRI and/or DAI in the DCI corresponding to the SPS configuration indicates a MCS parameter in a MCS table; or a MCS parameter in a MCS table is determined according to an offset indicated by the PRI and/or DAI in the DCI corresponding to the SPS configuration.

Here, the offset is an offset with respect to the original MCS parameter in the DCI. The MCS table is a MCS table corresponding to first-type OFDM symbols, or a MCS table corresponding to second-type OFDM symbols, or a MCS table shared by both the first-type OFDM symbols and the second-type OFDM symbols. Specifically, the manner of determine a MCS parameter in a MCS table according to the offset indicated by the PRI and/or DAI in the DCI corresponding to the SPS configuration may be as follows: this offset is added to (or subtracted from) the original MCS parameter in the DCI. The offset may take positive or negative values, and the offset values may be non-contiguous, including equally spaced (for example, {-4, -2, 0, 2, 4, 6}) or non-equally spaced (for example, {-4, -3, 0, 1, 2, 3}) patterns. This approach helps reduce signaling the overhead of the offset, for example, only the PRI is used.

Optionally, if the DCI is used to activate an SPS configuration, the base station and the UE consider that one MCS parameter indicated by the MCS parameter in this DCI is used both when an SPS PDSCH of the SPS configuration is transmitted in first-type OFDM symbols and when an SPS PDSCH of the SPS configuration is transmitted in second-type OFDM symbols. Furthermore, the same or different MCS tables (or subcarrier spacings, SCS) can be configured for the first-type OFDM symbols and the second-type OFDM symbols.

In one embodiment, the manner of determining two parameters values for one or more parameter types in the SPS configuration may be as follows: a FDRA parameter is determined according to PRI and/or DAI in DCI corresponding to the SPS configuration, and the FDRA parameter is used for transmission in either first-type OFDM symbols or second-type OFDM symbols; an original FDRA parameter in the DCI is repurposed to indicate another FDRA parameter, and the FDRA parameter is used for transmission in either the second-type OFDM symbols or the first-type OFDM symbols.

In this embodiment, the PRI and/or DAI in the DCI that is used to activate the SPS configuration is employed to determine a FDRA parameter, and this FDRA parameter is associated with first-type OFDM symbols (or second-type OFDM symbols). The original FDRA parameter in the DCI indicates another FDRA parameter, and this FDRA parameter is associated with second-type OFDM symbols (or first-type OFDM symbols). In this approach, the activated SPS configuration will be associated with two FDRA parameters in the DCI. If a transmission occasion of an SPS PDSCH for this SPS configuration occurs in first-type OFDM symbols, then the FDRA parameter associated with the first-type OFDM symbols is used for the SPS PDSCH. If a transmission occasion of an SPS PDSCH for this SPS configuration occurs in second-type OFDM symbols, then the FDRA parameter associated with the first-type OFDM symbols is used for the SPS PDSCH. Exemplarily, if a UE is configured with SBFD subbands and an SPS configuration based on the aforementioned Option 2, then the base station and the UE agree that the PRI and/or DAI in the DCI that is used to activate the SPS configuration is employed to determine a FDRA parameter, and this FDRA parameter is used when an SPS PDSCH of the SPS configuration is transmitted in SBFD symbols (or in non-SBFD symbols).

Optionally, the manner of determining a FDRA parameter according to the PRI and/or DAI in the DCI correspondingly to the SPS configuration includes at least one of the following: the PRI and/or DAI in the DCI corresponding to the SPS configuration indicates a FDRA parameter; or a FDRA parameter is determined according to an offset indicated by the PRI and/or DAI in the DCI corresponding to the SPS configuration.

Here, the offset is an offset with respect to the original FDRA parameter in the DCI. The manner of determine a FDRA parameter according to the offset indicated by the PRI and/or DAI in the DCI corresponding to the SPS configuration may be as follows: this offset is added to (or subtracted from) the original FDRA parameter in the DCI. The offset may take positive or negative values, and the offset values may be non-contiguous, including equally spaced (for example, {-4, -2, 0, 2, 4, 6}) or non-equally spaced (for example, {-4, -3, 0, 1, 2, 3}) patterns. This approach helps reduce signaling the overhead of the offset, for example, only the PRI is used.

Optionally, if the DCI is used to activate an SPS configuration, the base station and the UE consider that one FDRA parameter indicated by the FDRA parameter in this DCI is used both when an SPS PDSCH of the SPS configuration is transmitted in first-type OFDM symbols and when an SPS PDSCH of the SPS configuration is transmitted in second-type OFDM symbols. Furthermore, the same or different RBG for PDSCH RA type 0 (or PRG for PDSCH, or subcarrier spacings (SCS)) can be configured for the first-type OFDM symbols and the second-type OFDM symbols.

In one embodiment, the manner of determining two parameters values for one or more parameter types in the SPS configuration may be as follows: a VRB-to-PRB mapping parameter is determined according to PRI and/or DAI in DCI corresponding to the SPS configuration, and the VRB-to-PRB mapping parameter is used for transmission in either first-type OFDM symbols or second-type OFDM symbols; an original VRB-to-PRB mapping parameter in the DCI is repurposed to indicate another VRB-to-PRB mapping parameter, and the VRB-to-PRB mapping parameter is used for transmission in either the second-type OFDM symbols or the first-type OFDM symbols.

In this embodiment, the PRI and/or DAI in the DCI that is used to activate the SPS configuration is employed to determine a VRB-to-PRB mapping parameter, and this VRB-to-PRB mapping parameter is associated with first-type OFDM symbols (or second-type OFDM symbols). The original VRB-to-PRB mapping parameter in the DCI indicates another VRB-to-PRB mapping parameter, and this VRB-to-PRB mapping parameter is associated with second-type OFDM symbols (or first-type OFDM symbols). In this approach, the activated SPS configuration will be associated with two VRB-to-PRB mapping parameters in the DCI. If a transmission occasion of an SPS PDSCH for this SPS configuration occurs in first-type OFDM symbols, then the VRB-to-PRB mapping parameter associated with the first-type OFDM symbols is used for the SPS PDSCH. If a transmission occasion of an SPS PDSCH for this SPS configuration occurs in second-type OFDM symbols, then the VRB-to-PRB mapping parameter associated with the first-type OFDM symbols is used for the SPS PDSCH. Exemplarily, if a UE is configured with SBFD subbands and an SPS configuration based on the aforementioned Option 2, then the base station and the UE agree that the PRI and/or DAI in the DCI that is used to activate the SPS configuration is employed to determine a VRB-to-PRB mapping parameter, and this VRB-to-PRB mapping parameter is used when an SPS PDSCH of the SPS configuration is transmitted in SBFD symbols (or in non-SBFD symbols).

Optionally, the manner of determining a VRB-to-PRB mapping parameter according to the PRI and/or DAI in the DCI corresponding to the SPS configuration may be as follows: the PRI and/or DAI in the DCI corresponding to the SPS configuration is repurposed to indicate a VRB-to-PRB mapping parameter. The VRB-to-PRB mapping parameter is used when an SPS PDSCH of the SPS configuration is transmitted in first-type OFDM symbols (or second-type OFDM symbols).

If the DCI is used to activate one SPS configuration, the base station and the UE consider that a VRB-to-PRB mapping indicated by the VRB-to-PRB mapping parameter in the DCI is used both when an SPS PDSCH of the SPS configuration is transmitted in SBFD symbols and when an SPS PDSCH of the SPS configuration is transmitted in non-SBFD symbols.

In one embodiment, the manner of determining two parameters values for one or more parameter types in the SPS configuration may be as follows: a TPC parameter is determined according to PRI and/or DAI in DCI corresponding to the SPS configuration, and the TPC parameter is associated with either first-type OFDM symbols or second-type OFDM symbols; an original TPC parameter in the DCI is repurposed to indicate another TPC parameter, and the TPC parameter is associated with either the second-type OFDM symbols or the first-type OFDM symbols.

In this embodiment, the PRI and/or DAI in the DCI that is used to activate the SPS configuration is employed to determine a TPC parameter, and this TPC parameter is associated with first-type OFDM symbols (or second-type OFDM symbols). The original TPC parameter in the DCI indicates another TPC parameter, and this TPC parameter is associated with second-type OFDM symbols (or first-type OFDM symbols). In this approach, the activated SPS configuration will be associated with two TPC parameters in the DCI. If a HARQ-ACK PUCCH of an SPS PDSCH of the SPS configuration occurs in first-type OFDM symbols, then the TPC parameter associated with the first-type OFDM symbols is used for the HARQ-ACK PUCCH of the SPS PDSCH. If a HARQ-ACK PUCCH of an SPS PDSCH of the SPS configuration occurs in second-type OFDM symbols, then the TPC parameter associated with the second-type OFDM symbols is used for the HARQ-ACK PUCCH of the SPS PDSCH. Exemplarily, if a UE is configured with SBFD subbands and an SPS configuration based on the aforementioned Option 2, then the base station and the UE agree that the PRI and/or DAI in the DCI that is used to activate the SPS configuration is employed to determine a TPC parameter, and this TPC parameter is used when a HARQ-ACK PUCCH of an SPS PDSCH of the SPS configuration is transmitted in SBFD symbols (or in non-SBFD symbols).

Optionally, the manner of determining a TPC parameter according to the PRI and/or DAI in the DCI correspondingly to the SPS configuration includes at least one of the following: the PRI and/or DAI in the DCI corresponding to the SPS configuration indicates a TPC parameter in a TPC table; or a TPC parameter in a TPC table is determined according to an offset indicated by the PRI and/or DAI in the DCI corresponding to the SPS configuration.

Here, the offset is an offset with respect to the original TPC parameter in the DCI. The TPC table is a TPC table corresponding to first-type OFDM symbols, or a TPC table corresponding to second-type OFDM symbols, or a TPC table shared by both the first-type OFDM symbols and the second-type OFDM symbols. Specifically, the manner of determine a TPC parameter in a TPC table according to the offset indicated by the PRI and/or DAI in the DCI corresponding to the SPS configuration may be as follows: this offset is added to (or subtracted from) the original TPC parameter in the DCI. The offset may take positive or negative values, and the offset values may be non-contiguous, including equally spaced (for example, {-4, -2, 0, 2, 4, 6}) or non-equally spaced (for example, {-4, -3, 0, 1, 2, 3}) patterns. This approach helps reduce signaling the overhead of the offset, for example, only the PRI is used.

Optionally, if the DCI is used to activate an SPS configuration, the base station and the UE consider that one TPC parameter indicated by the TPC parameter in this DCI is used both when a HARQ-ACK PUCCH of an SPS PDSCH of the configuration is transmitted in first-type OFDM symbols and when a HARQ-ACK PUCCH of an SPS PDSCH of the configuration is transmitted in second-type OFDM symbols. Furthermore, the same or different TPC tables (or subcarrier spacings, SCS) can be configured for the first-type OFDM symbols and the second-type OFDM symbols.

In one embodiment, the manner of determining two parameters values for one or more parameter types in the SPS configuration may be as follows: a timing interval parameter from a transmission channel to HARQ-ACK is determined according to PRI and/or DAI in DCI corresponding to the SPS configuration, and the timing interval parameter from the transmission channel to HARQ-ACK is associated with either first-type OFDM symbols or second-type OFDM symbols; an original timing interval parameter from a transmission channel to HARQ-ACK in the DCI is repurposed to indicate another timing interval parameter from transmission channel to HARQ-ACK, and the timing interval parameter from transmission channel to HARQ-ACK is associated with either the second-type OFDM symbols or the first-type OFDM symbols.

In this embodiment, the PRI and/or DAI in the DCI that is used to activate the SPS configuration is employed to determine a timing interval parameter from a transmission channel to HARQ-ACK, and this timing interval parameter from a transmission channel to HARQ-ACK is associated with first-type OFDM symbols (or second-type OFDM symbols). The original timing interval parameter from a transmission channel to HARQ-ACK in the DCI indicates another timing interval parameter from a transmission channel to HARQ-ACK, and this timing interval parameter from a transmission channel to HARQ-ACK is associated with second-type OFDM symbols (or first-type OFDM symbols). In this approach, the activated SPS configuration will be associated with two timing interval parameters from a transmission channel to HARQ-ACK in the DCI. If a transmission occasion of an SPS PDSCH for this SPS configuration occurs in first-type OFDM symbols, then the timing interval parameter from a transmission channel to HARQ-ACK associated with the first-type OFDM symbols is used for the SPS PDSCH. If a transmission occasion of an SPS PDSCH for this SPS configuration occurs in second-type OFDM symbols, then the timing interval parameter from a transmission channel to HARQ-ACK associated with the first-type OFDM symbols is used for the SPS PDSCH. Exemplarily, if a UE is configured with SBFD subbands and an SPS configuration based on the aforementioned Option 2, then the base station and the UE agree that the PRI and/or DAI in the DCI that is used to activate the SPS configuration is employed to determine a timing interval parameter from a transmission channel to HARQ-ACK, and this timing interval parameter from a transmission channel to HARQ-ACK is used when an SPS PDSCH of the SPS configuration is transmitted in SBFD symbols (or in non-SBFD symbols).

Optionally, the manner of determining a timing interval parameter from a transmission channel to HARQ-ACK according to the PRI and/or DAI in the DCI corresponding to the SPS configuration may include at least one of the following: the PRI and/or DAI in the DCI corresponding to the SPS configuration indicates a timing interval parameter from a transmission channel to HARQ-ACK in a set of timing intervals from a transmission channel to HARQ-ACK; or a timing interval parameter from a transmission channel to HARQ-ACK in a set of timing intervals from a transmission channel to HARQ-ACK is determined according to an offset indicated by the PRI and/or DAI in the DCI corresponding to the SPS configuration.

Here, the offset is an offset with respect to the original timing interval parameters from a transmission channel to HARQ-ACK in the DCI. The set of timing intervals from a transmission channel to HARQ-ACK is a set of timing intervals from a transmission channel to HARQ-ACK corresponding to first-type OFDM symbols, or a set of timing intervals from a transmission channel to HARQ-ACK corresponding to second-type OFDM symbols, or a set of timing intervals from a transmission channel to HARQ-ACK shared by both the first-type OFDM symbols and the second-type OFDM symbols. Specifically, the manner of determine a timing interval parameter from a transmission channel to HARQ-ACK in a time-domain resource set according to the offset indicated by the PRI and/or DAI in the DCI corresponding to the SPS configuration may be as follows: this offset is added to (or subtracted from) the original timing interval parameter from a transmission channel to HARQ-ACK in the DCI. The offset may take positive or negative values, and the offset values may be non-contiguous, including equally spaced (for example, {-4, -2, 0, 2, 4, 6}) or non-equally spaced (for example, {-4, -3, 0, 1, 2, 3}) patterns. This approach helps reduce signaling the overhead of the offset, for example, only the PRI is used.

Optionally, if the DCI is used to activate an SPS configuration, the base station and the UE consider that one timing interval parameter from a transmission channel to HARQ-ACK indicated by the timing interval parameter from a transmission channel to HARQ-ACK in this DCI is used both when an SPS PDSCH of the SPS configuration is transmitted in first-type OFDM symbols and when an SPS PDSCH of the SPS configuration is transmitted in second-type OFDM symbols. Furthermore, the same or different PDSCH time-domain resource sets (or subcarrier spacings, SCS) can be configured for the first-type OFDM symbols and the second-type OFDM symbols.

In the above embodiments, the PRI and/or DAI in the DCI is used to determine an additional parameter, however, because the number of parameters in the DCI that can be reinterpreted is limited, only one additional parameter can be determined based on the reinterpretation of the PRI and/or DAI in the DCI in the above embodiments. For example, by reinterpreting the PRI and/or DAI in the DCI, an additional MCS parameter may be determined, this additional MCS parameter is used when an SPS PDSCH of the aforementioned SPS configuration is transmitted in SBFD symbols, while the original MCS in DCI 1-0 may be used when an SPS PDSCH of the aforementioned SPS configuration is transmitted in first-type OFDM symbols. In this way, two MCS parameters may be obtained via the DCI and are applied to the aforementioned SPS configuration. However, apart from the MCS parameter, other parameters for an SPS configuration (such as TDRA, FDRA, VRB-to-PRB mapping, TPC, PDSCH-to-HARQ-ACK timing, etc.) also require two parameter values, these two parameter values are respectively used for SPS PDSCHs in first-type OFDM symbols and in second-type OFDM symbols.

In one embodiment, the manner of determining two parameters values for one or more parameter types in the SPS configuration may be as follows: two parameter values for one or more parameter types in the SPS configuration are determined based on RRC signaling of the SPS configuration and/or DCI corresponding to the SPS configuration.

In one embodiment, the manner of determining two parameter values for one or more parameter types in the SPS configuration based on RRC signaling of the SPS configuration and/or DCI corresponding to the SPS configuration may be as follows: one TDRA parameter associated with first-type OFDM symbols and another TDRA parameter associated with second-type OFDM symbols are configured in RRC signaling of the SPS configuration, and they are denoted as a first TDRA parameter and a second TDRA parameter, respectively.

In this embodiment, if the SPS configuration is activated, when an SPS PDSCH of the SPS configuration is transmitted in first-type OFDM symbols, the first TDRA parameter is used in the SPS PDSCH; when another SPS PDSCH of the SPS configuration is transmitted in second-type OFDM symbols, the second TDRA parameter is used in the SPS PDSCH.

**In** this embodiment, one TDRA parameter associated with first-type OFDM symbols and another TDRA parameter associated with second-type OFDM symbols are configured in RRC signaling of the SPS configuration, and they are denoted as a first TDRA parameter and a second TDRA parameter, respectively, includes at least one of the following: if either the first TDRA parameter or the second TDRA parameter is defaulted in the RRC signaling of the SPS configuration, the defaulted first or second TDRA parameter is determined according to the TDRA parameter in the RRC signaling that is used to activate the SPS configuration. If either the first TDRA parameter or the second TDRA parameter is defaulted in the RRC signaling of SPS configuration, the defaulted TDRA parameter is determined according to a TDRA parameter that is present in the RRC signaling. If both the first TDRA parameter and the second TDRA parameter are defaulted in the RRC signaling of SPS configuration, the defaulted first TDRA parameter and second TDRA parameter are determined according to the TDRA parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: one MCS parameter associated with first-type OFDM symbols and another MCS parameter associated with second-type OFDM symbols are configured in RRC signaling of the SPS configuration, and they are denoted as a first MCS parameter and a second MCS parameter, respectively.

In this embodiment, if the SPS configuration is activated, when an SPS PDSCH of the SPS configuration is transmitted in first-type OFDM symbols, the first MCS parameter is used in the SPS PDSCH; when another SPS PDSCH of the SPS configuration is transmitted in second-type OFDM symbols, the second MCS parameter is used in the SPS PDSCH.

In this embodiment, one MCS parameter associated with first-type OFDM symbols and another MCS parameter associated with second-type OFDM symbols are configured in RRC signaling of the SPS configuration, and they are denoted as a first MCS parameter and a second MCS parameter, respectively, includes at least one of the following: if either the first MCS parameter or the second MCS parameter is defaulted in the RRC signaling of the SPS configuration, the defaulted first or second MCS parameter is determined according to the MCS parameter in the RRC signaling that is used to activate the SPS configuration. If either the first MCS parameter or the second MCS parameter is defaulted in the RRC signaling of SPS configuration, the defaulted MCS parameter is determined according to a MCS parameter that is present in the RRC signaling. If both the first MCS parameter and the second MCS parameter are defaulted in the RRC signaling of SPS configuration, the defaulted first MCS parameter and second MCS parameter are determined according to the MCS parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: one FDRA parameter associated with first-type OFDM symbols and another FDRA parameter associated with second-type OFDM symbols are configured in RRC signaling of the SPS configuration, and they are denoted as a first FDRA parameter and a second FDRA parameter, respectively.

In this embodiment, if the SPS configuration is activated, when an SPS PDSCH of the SPS configuration is transmitted in first-type OFDM symbols, the first FDRA parameter is used in the SPS PDSCH; when another SPS PDSCH of the SPS configuration is transmitted in second-type OFDM symbols, the second FDRA parameter is used in the SPS PDSCH.

In this embodiment, one FDRA parameter associated with first-type OFDM symbols and another FDRA parameter associated with second-type OFDM symbols are configured in RRC signaling of the SPS configuration, and they are denoted as a first FDRA parameter and a second FDRA parameter, respectively, includes at least one of the following: if either the first FDRA parameter or the second FDRA parameter is defaulted in the RRC signaling of the SPS configuration, the defaulted first or second FDRA parameter is determined according to the FDRA parameter in the RRC signaling that is used to activate the SPS configuration. If either the first FDRA parameter or the second FDRA parameter is defaulted in the RRC signaling of SPS configuration, the defaulted FDRA parameter is determined according to a FDRA parameter that is present in the RRC signaling. If both the first FDRA parameter and the second FDRA parameter are defaulted in the RRC signaling of SPS configuration, the defaulted first FDRA parameter and second FDRA parameter are determined according to the FDRA parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: one VRB-to-PRB mapping parameter associated with first-type OFDM symbols and another VRB-to-PRB mapping parameter associated with second-type OFDM symbols are configured in RRC signaling of the SPS configuration, and they are denoted as a first VRB-to-PRB mapping parameter and a second VRB-to-PRB mapping parameter, respectively.

In this embodiment, if the SPS configuration is activated, when an SPS PDSCH of the SPS configuration is transmitted in first-type OFDM symbols, the first VRB-to-PRB mapping parameter is used in the SPS PDSCH; when another SPS PDSCH of the SPS configuration is transmitted in second-type OFDM symbols, the second VRB-to-PRB mapping parameter is used in the SPS PDSCH.

In this embodiment, one VRB-to-PRB mapping parameter associated with first-type OFDM symbols and another VRB-to-PRB mapping parameter associated with second-type OFDM symbols are configured in RRC signaling of the SPS configuration, and they are denoted as a first VRB-to-PRB mapping parameter and a second VRB-to-PRB mapping parameter, respectively, includes at least one of the following: if either the first VRB-to-PRB mapping parameter or the second VRB-to-PRB mapping parameter is defaulted in the RRC signaling of the SPS configuration, the defaulted first or second VRB-to-PRB mapping parameter is determined according to the VRB-to-PRB mapping parameter in the RRC signaling that is used to activate the SPS configuration. If either the first VRB-to-PRB mapping parameter or the second VRB-to-PRB mapping parameter is defaulted in the RRC signaling of SPS configuration, the defaulted VRB-to-PRB mapping parameter is determined according to a VRB-to-PRB mapping parameter that is present in the RRC signaling. If both the first VRB-to-PRB mapping parameter and the second VRB-to-PRB mapping parameter is defaulted in the RRC signaling of SPS configuration, the defaulted first VRB-to-PRB mapping parameter and second VRB-to-PRB mapping parameter are determined according to the VRB-to-PRB mapping parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: one TPC parameter associated with first-type OFDM symbols and another TPC parameter associated with second-type OFDM symbols are configured in RRC signaling of the SPS configuration, and they are denoted as a first TPC parameter and a second TPC parameter, respectively.

In this embodiment, if the SPS configuration is activated, when a HARQ-ACK PUCCH of an SPS PDSCH of the SPS configuration is transmitted in first-type OFDM symbols, the first TPC parameter is used in the HARQ-ACK PUCCH of the SPS PDSCH; when a HARQ-ACK PUCCH of another SPS PDSCH of the SPS configuration is transmitted in second-type OFDM symbols, the second TPC parameter is used in the HARQ-ACK PUCCH of the SPS PDSCH.

In this embodiment, one TPC parameter associated with first-type OFDM symbols and another TPC parameter associated with second-type OFDM symbols are configured in RRC signaling of the SPS configuration, and they are denoted as a first TPC parameter and a second TPC parameter, respectively, includes at least one of the following: if either the first TPC parameter or the second TPC parameter is defaulted in the RRC signaling of the SPS configuration, the defaulted first or second TPC parameter is determined according to the TPC parameter in the RRC signaling that is used to activate the SPS configuration; if either the first TPC parameter or the second TPC parameter is defaulted in the RRC signaling of SPS configuration, the defaulted TPC parameter is determined according to a TPC parameter that is present in the RRC signaling; if both the first TPC parameter and the second TPC parameter are defaulted in the RRC signaling of SPS configuration, the defaulted first TPC parameter and second TPC parameter are determined according to the TPC parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: one timing interval parameter from a transmission channel to HARQ-ACK associated with first-type OFDM symbols and another timing interval parameter from a transmission channel to HARQ-ACK associated with second-type OFDM symbols are configured in RRC signaling of the SPS configuration, and they are denoted as a first timing interval parameter from a transmission channel to HARQ-ACK and a second timing interval parameter from a transmission channel to HARQ-ACK, respectively.

In this embodiment, if the SPS configuration is activated, when an SPS PDSCH of the SPS configuration is transmitted in first-type OFDM symbols, the first timing interval parameter from a transmission channel to HARQ-ACK is used in the SPS PDSCH; when another SPS PDSCH of the SPS configuration is transmitted in second-type OFDM symbols, the second timing interval parameter from a transmission channel to HARQ-ACK is used in the SPS PDSCH.

In this embodiment, one timing interval parameter from a transmission channel to HARQ-ACK associated with first-type OFDM symbols and another timing interval parameter from a transmission channel to HARQ-ACK associated with second-type OFDM symbols are configured in RRC signaling of the SPS configuration, and they are denoted as a first timing interval parameter from a transmission channel to HARQ-ACK and a second timing interval parameter from a transmission channel to HARQ-ACK, respectively, includes at least one of the following: if either the first timing interval parameter from a transmission channel to HARQ-ACK or the second timing interval parameter from a transmission channel to HARQ-ACK is defaulted in the RRC signaling of the SPS configuration, the defaulted first or second timing interval parameter from a transmission channel to HARQ-ACK is determined according to the timing interval parameter from a transmission channel to HARQ-ACK in the RRC signaling that is used to activate the SPS configuration. If either the first timing interval parameter from a transmission channel to HARQ-ACK or the second timing interval parameter from a transmission channel to HARQ-ACK is defaulted in the RRC signaling of the SPS configuration, the defaulted timing interval parameter from a transmission channel to HARQ-ACK is determined according to a timing interval parameter from a transmission channel to HARQ-ACK that is present in the RRC signaling. If both the first timing interval parameter from a transmission channel to HARQ-ACK and the second timing interval parameter from a transmission channel to HARQ-ACK are defaulted in the RRC signaling of the SPS configuration, the defaulted first timing interval parameter from a transmission channel to HARQ-ACK and second timing interval parameter from a transmission channel to HARQ-ACK are determined according to the timing interval parameter from a transmission channel to HARQ-ACK in the DCI that is used to activate the SPS configuration.

In one embodiment, the manner of determining two parameter values for one or more parameter types in the SPS configuration based on RRC signaling of the SPS configuration and/or DCI corresponding to the SPS configuration may be as follows: a shared TDRA parameter is configured in the RRC signaling of the SPS configuration.

The shared TDRA parameter is associated with both first-type OFDM symbols and second-type OFDM symbols. If the SPS configuration is activated, when an SPS PDSCH of the SPS configuration is transmitted in first-type OFDM symbols, the shared TDRA parameter is used in the SPS PDSCH; when another SPS PDSCH of the SPS configuration is transmitted in second-type OFDM symbols, the shared TDRA parameter is also used in the SPS PDSCH.

In this embodiment, the manner of configuring a shared TDRA parameter in the RRC signaling of the SPS configuration may be as follows: if a shared TDRA parameter is defaulted in the RRC signaling of the SPS configuration, the defaulted shared TDRA parameter is determined according to the TDRA parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: a shared MCS parameter is configured in the RRC signaling of the SPS configuration.

The shared MCS parameter is associated with both first-type OFDM symbols and second-type OFDM symbols. If the SPS configuration is activated, when an SPS PDSCH of the SPS configuration is transmitted in first-type OFDM symbols, the shared MCS parameter is used in the SPS PDSCH; when another SPS PDSCH of the SPS configuration is transmitted in second-type OFDM symbols, the shared MCS parameter is also used in the SPS PDSCH.

In this embodiment, the manner of configuring a shared MCS parameter in the RRC signaling of the SPS configuration may be as follows: if a shared MCS parameter is defaulted in the RRC signaling of the SPS configuration, the defaulted shared MCS parameter is determined according to the MCS parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: a shared FDRA parameter is configured in the RRC signaling of the SPS configuration.

The shared FDRA parameter is associated with both first-type OFDM symbols and second-type OFDM symbols. If the SPS configuration is activated, when an SPS PDSCH of the SPS configuration is transmitted in first-type OFDM symbols, the shared FDRA parameter is used in the SPS PDSCH; when another SPS PDSCH of the SPS configuration is transmitted in second-type OFDM symbols, the shared FDRA parameter is also used in the SPS PDSCH.

In this embodiment, the manner of configuring a shared FDRA parameter in the RRC signaling of the SPS configuration may be as follows: if a shared FDRA parameter is defaulted in the RRC signaling of the SPS configuration, the defaulted shared FDRA parameter is determined according to the FDRA parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: a shared VRB-to-PRB mapping parameter is configured in the RRC signaling of the SPS configuration.

The shared VRB-to-PRB mapping parameter is associated with both first-type OFDM symbols and second-type OFDM symbols. If the SPS configuration is activated, when an SPS PDSCH of the SPS configuration is transmitted in first-type OFDM symbols, the shared VRB-to-PRB mapping parameter is used in the SPS PDSCH; when another SPS PDSCH of the SPS configuration is transmitted in second-type OFDM symbols, the shared VRB-to-PRB mapping parameter is also used in the SPS PDSCH.

In this embodiment, the manner of configuring a shared VRB-to-PRB mapping parameter in the RRC signaling of the SPS configuration may be as follows: if a shared VRB-to-PRB mapping parameter is defaulted in the RRC signaling of the SPS configuration, the defaulted shared VRB-to-PRB mapping parameter is determined according to the VRB-to-PRB mapping parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: a shared TPC parameter is configured in the RRC signaling of the SPS configuration;
the shared TPC parameter is associated with both first-type OFDM symbols and second-type OFDM symbols. If the SPS configuration is activated, when a HARQ-ACK PUCCH of an SPS PDSCH of the SPS configuration is transmitted in first-type OFDM symbols, the shared TPC parameter is used in the HARQ-ACK PUCCH of the SPS PDSCH; when a HARQ-ACK PUCCH of another SPS PDSCH of the SPS configuration is transmitted in second-type OFDM symbols, the shared TPC parameter is also used in the HARQ-ACK PUCCH of the SPS PDSCH.

In this embodiment, the manner of configuring a shared TPC parameter in the RRC signaling of the SPS configuration may be as follows: if a shared TPC parameter is defaulted in the RRC signaling of the SPS configuration, the defaulted shared TPC parameter is determined according to the TPC parameter in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: a shared timing interval parameter from a transmission channel to HARQ-ACK is configured in the RRC signaling of the SPS configuration.

The shared timing interval parameter from a transmission channel to HARQ-ACK is associated with both first-type OFDM symbols and second-type OFDM symbols. If the SPS configuration is activated, when an SPS PDSCH of the SPS configuration is transmitted in first-type OFDM symbols, the first timing interval parameter from a transmission channel to HARQ-ACK is used in the SPS PDSCH; when another SPS PDSCH of the SPS configuration is transmitted in second-type OFDM symbols, the second timing interval parameter from a transmission channel to HARQ-ACK is also used in the SPS PDSCH.

In this embodiment, the manner of configuring a shared timing interval parameter from a transmission channel to HARQ-ACK in the RRC signaling of the SPS configuration may be as follows: if a shared timing interval parameter from a transmission channel to HARQ-ACK is defaulted in the RRC signaling of the SPS configuration, the defaulted shared timing interval parameter from a transmission channel to HARQ-ACK is determined according to the timing interval parameter from a transmission channel to HARQ-ACK in the DCI that is used to activate SPS configuration.

In one embodiment, the manner of determining two parameter values for one or more parameter types in the SPS configuration based on RRC signaling of the SPS configuration and/or DCI corresponding to the SPS configuration may be as follows: a TDRA parameter associated with either first-type OFDM symbols or a second-type OFDM symbols is configured in RRC signaling of the SPS configuration; the TDRA parameter in the DCI that is used to activate SPS configuration is associated with either the second-type OFDM symbols or first-type OFDM symbols.

In this embodiment, if a TDRA parameter associated with the first-type OFDM symbols is configured in RRC signaling of the SPS configuration and the TDRA parameter in the DCI that is used to activate the SPS configuration is associated with the second-type OFDM symbols, then when the SPS configuration is activated and an SPS PDSCH of the SPS configuration is transmitted in first-type OFDM symbols, the TDRA parameter in the RRC signaling is used in the SPS PDSCH; when another SPS PDSCH of the SPS configuration is transmitted in second-type OFDM symbols, the TDRA parameter in the DCI that activates the SPS configuration is used in the SPS PDSCH.

In this embodiment, if a TDRA parameter is defaulted in the RRC signaling of the SPS configuration, the TDRA parameter in the DCI that is used to activate the SPS configuration is associated with both the first-type OFDM symbols and the second-type OFDM symbols. That is, when an SPS PDSCH of the SPS configuration is transmitted in first-type OFDM symbols and in second-type OFDM symbols, the TDRA parameter in the DCI that activates the SPS configuration is used.

In one embodiment, the manner of determining two parameter values for one or more parameter types in the SPS configuration based on RRC signaling of the SPS configuration and/or DCI corresponding to the SPS configuration may be as follows: a MCS parameter associated with either first-type OFDM symbols or a second-type OFDM symbols is configured in RRC signaling of the SPS configuration; the MCS parameter in the DCI that is used to activate SPS configuration is associated with either the second-type OFDM symbols or first-type OFDM symbols.

In this embodiment, if a MCS parameter associated with the first-type OFDM symbols is configured in RRC signaling of the SPS configuration and the MCS parameter in the DCI that is used to activate the SPS configuration is associated with the second-type OFDM symbols, then when the SPS configuration is activated and an SPS PDSCH of the SPS configuration is transmitted in first-type OFDM symbols, the MCS parameter in the RRC signaling is used in the SPS PDSCH; when another SPS PDSCH of the SPS configuration is transmitted in second-type OFDM symbols, the MCS parameter in the DCI that activates the SPS configuration is used in the SPS PDSCH.

In this embodiment, if a MCS parameter is defaulted in the RRC signaling of the SPS configuration, the MCS parameter in the DCI that is used to activate the SPS configuration is associated with both the first-type OFDM symbols and the second-type OFDM symbols. That is, when an SPS PDSCH of the SPS configuration is transmitted in first-type OFDM symbols and in second-type OFDM symbols, the MCS parameter in the DCI that activates the SPS configuration is used.

In one embodiment, the manner of determining two parameter values for one or more parameter types in the SPS configuration based on RRC signaling of the SPS configuration and/or DCI corresponding to the SPS configuration may be as follows: a FDRA parameter associated with either first-type OFDM symbols or a second-type OFDM symbols is configured in RRC signaling of the SPS configuration; the FDRA parameter in the DCI that is used to activate SPS configuration is associated with either the second-type OFDM symbols or first-type OFDM symbols.

In this embodiment, if a FDRA parameter associated with the first-type OFDM symbols is configured in RRC signaling of the SPS configuration and the FDRA parameter in the DCI that is used to activate the SPS configuration is associated with the second-type OFDM symbols, then when the SPS configuration is activated and an SPS PDSCH of the SPS configuration is transmitted in first-type OFDM symbols, the FDRA parameter in the RRC signaling is used in the SPS PDSCH; when another SPS PDSCH of the SPS configuration is transmitted in second-type OFDM symbols, the FDRA parameter in the DCI that activates the SPS configuration is used in the SPS PDSCH.

If a FDRA parameter is defaulted in the RRC signaling of the SPS configuration, the FDRA parameter in the DCI that is used to activate the SPS configuration is associated with both the first-type OFDM symbols and the second-type OFDM symbols. That is, when an SPS PDSCH of the SPS configuration is transmitted in first-type OFDM symbols and in second-type OFDM symbols, the FDRA parameter in the DCI that activates the SPS configuration is used.

In one embodiment, the manner of determining two parameter values for one or more parameter types in the SPS configuration based on RRC signaling of the SPS configuration and/or DCI corresponding to the SPS configuration may be as follows: a VRB-to-PRB mapping parameter associated with either first-type OFDM symbols or second-type OFDM symbols is configured in RRC signaling of the SPS configuration; the VRB-to-PRB mapping parameter in the DCI that is used to activate the SPS configuration is associated with either the second-type OFDM symbols or the first-type OFDM symbols.

In this embodiment, if a VRB-to-PRB mapping parameter associated with the first-type OFDM symbols is configured in RRC signaling of the SPS configuration and the VRB-to-PRB mapping parameter in the DCI that is used to activate the SPS configuration is associated with the second-type OFDM symbols, then when the SPS configuration is activated and an SPS PDSCH of the SPS configuration is transmitted in first-type OFDM symbols, the VRB-to-PRB mapping parameter in the RRC signaling is used in the SPS PDSCH; when another SPS PDSCH of the SPS configuration is transmitted in second-type OFDM symbols, the VRB-to-PRB mapping parameter in the DCI that activates the SPS configuration is used in the SPS PDSCH.

If a VRB-to-PRB mapping parameter is defaulted in RRC signaling of the SPS configuration, the VRB-to-PRB mapping parameter in the DCI that is used to activate SPS configuration is associated with both the first-type OFDM symbols and the second-type OFDM symbols. That is, when an SPS PDSCH of the SPS configuration is transmitted in first-type OFDM symbols and in second-type OFDM symbols, the VRB-to-PRB mapping parameter in the DCI that activates the SPS configuration is used.

In one embodiment, the manner of determining two parameter values for one or more parameter types in the SPS configuration based on RRC signaling of the SPS configuration and/or DCI corresponding to the SPS configuration may be as follows: a TPC parameter associated with either first-type OFDM symbols or a second-type OFDM symbols is configured in RRC signaling of the SPS configuration; the TPC parameter in the DCI that is used to activate SPS configuration is associated with either the second-type OFDM symbols or first-type OFDM symbols.

In this embodiment, if a TPC parameter associated with the first-type OFDM symbols is configured in RRC signaling of the SPS configuration and the TPC parameter in the DCI that is used to activate the SPS configuration is associated with the second-type OFDM symbols, if the SPS configuration is activated, when a HARQ-ACK PUCCH of an SPS PDSCH of the SPS configuration is transmitted in first-type OFDM symbols, the TPC parameter in the RRC signaling is used in the HARQ-ACK PUCCH of the SPS PDSCH; when a HARQ-ACK PUCCH of another SPS PDSCH of the SPS configuration is transmitted in second-type OFDM symbols, the TPC parameter in the RRC signaling is also used in the HARQ-ACK PUCCH of the SPS PDSCH.

If a TPC parameter is defaulted in the RRC signaling of the SPS configuration, the TPC parameter in the DCI that is used to activate the SPS configuration is associated with both the first-type OFDM symbols and the second-type OFDM symbols. That is, when a HARQ-ACK PUCCH of an SPS PDSCH of the SPS configuration is transmitted in first-type OFDM symbols and in second-type OFDM symbols, the TPC parameter in the DCI that activates the SPS configuration is used.

In one embodiment, the manner of determining two parameter values for one or more parameter types in the SPS configuration based on RRC signaling of the SPS configuration and/or DCI corresponding to the SPS configuration may be as follows: a timing interval parameter from a transmission channel to HARQ-ACK associated with either first-type OFDM symbols or second-type OFDM symbols is configured in RRC signaling of the SPS configuration, the timing interval parameter from a transmission channel to HARQ-ACK in the DCI that is used to activate SPS configuration is associated with either the second-type OFDM symbols or the first-type OFDM symbols.

In this embodiment, if a timing interval parameter from a transmission channel to HARQ-ACK associated with the first-type OFDM symbols is configured in RRC signaling of the SPS configuration and the timing interval parameter from a transmission channel to HARQ-ACK in the DCI that is used to activate the SPS configuration is associated with the second-type OFDM symbols, then when the SPS configuration is activated and an SPS PDSCH of the SPS configuration is transmitted in first-type OFDM symbols, the timing interval parameter from a transmission channel to HARQ-ACK in the RRC signaling is used in the SPS PDSCH; when another SPS PDSCH of the SPS configuration is transmitted in second-type OFDM symbols, the timing interval parameter from a transmission channel to HARQ-ACK in the DCI that activates the SPS configuration is used in the SPS PDSCH.

If a timing interval parameter from a transmission channel to HARQ-ACK is defaulted in the RRC signaling of the SPS configuration, the timing interval parameter from a transmission channel to HARQ-ACK in the DCI that is used to activate the SPS configuration is associated with both the first-type OFDM symbols and the second-type OFDM symbols. That is, when an SPS PDSCH of the SPS configuration is transmitted in first-type OFDM symbols and in second-type OFDM symbols, the timing interval parameter from a transmission channel to HARQ-ACK in the DCI that activates the SPS configuration is used.

In one embodiment, the manner of determining two parameter values for one or more parameter types in the SPS configuration based on RRC signaling of the SPS configuration and/or DCI corresponding to the SPS configuration may be as follows: an original TDRA parameter in DCI corresponding to the SPS configuration indicates a TDRA parameter associated with either first-type OFDM symbols or second-type OFDM symbols, a first set of remaining parameters in the DCI corresponding to the SPS configuration indicates another TDRA parameter associated with either second-type OFDM symbols or first-type OFDM symbols; two parameters corresponding to parameter types in the first set of remaining parameters are added in RRC signaling of the SPS configuration, with one parameter associated with first-type OFDM symbols and the other associated with second-type OFDM symbols.

The first set of remaining parameters comprises one or more parameters among the remaining parameters in the DCI other than the TDRA parameter.

In this embodiment, if the first set of remaining parameters, consisting of one or more of the MCS parameter, FDRA parameter, VRB-to-PRB mapping parameter, TPC parameter, and timing interval parameter from a transmission channel to HARQ-ACK in the DCI corresponding to the SPS configuration, indicates a TDRA parameter, then two parameters in the first set of remaining parameters are added in the RRC signaling of the SPS configuration, with one parameter associated with the first-type OFDM symbols and the other associated with the second-type OFDM symbols. Exemplarily, if an original MCS parameter in the DCI is used to indicate a TDRA parameter, then two MCS parameters are added in the RRC signaling of the SPS configuration, with one associated with the first-type OFDM symbols and the other associated with the second-type OFDM symbols.

In one embodiment, the manner of determining two parameter values for one or more parameter types in the SPS configuration based on RRC signaling of the SPS configuration and/or DCI corresponding to the SPS configuration may be as follows: an original MCS parameter in DCI corresponding to the SPS configuration indicates a MCS parameter associated with either first-type OFDM symbols or second-type OFDM symbols, a second set of remaining parameters in the DCI corresponding to the SPS configuration indicates another MCS parameter associated with either second-type OFDM symbols or first-type OFDM symbols; two parameters corresponding to parameter types in the second set of remaining parameters are added in RRC signaling of the SPS configuration, with one parameter associated with first-type OFDM symbols and the other associated with second-type OFDM symbols.

The second set of remaining parameters comprises one or more parameters among the remaining parameters in the DCI other than the MCS parameter.

In this embodiment, if the second set of remaining parameters, consisting of one or more of the TDRA parameter, FDRA parameter, VRB-to-PRB mapping parameter, TPC parameter, and timing interval parameter from a transmission channel to HARQ-ACK in the DCI corresponding to the SPS configuration, indicates a MCS parameter, then two parameters in the second set of remaining parameters are added in the RRC signaling of the SPS configuration, with one parameter associated with the first-type OFDM symbols and the other associated with the second-type OFDM symbols.

In one embodiment, the manner of determining two parameter values for one or more parameter types in the SPS configuration based on RRC signaling of the SPS configuration and/or DCI corresponding to the SPS configuration may be as follows: an original FDRA parameter in of DCI corresponding to the SPS configuration indicates a FDRA parameter associated with either first-type OFDM symbols or second-type OFDM symbols, a third set of remaining parameters in the of DCI corresponding to the SPS configuration indicates another FDRA parameter associated with either second-type OFDM symbols or first-type OFDM symbols; two parameters corresponding to parameter types in the third set of remaining parameters are added in RRC signaling of the SPS configuration, with one parameter associated with first-type OFDM symbols and the other associated with second-type OFDM symbols.

The third set of remaining parameters comprises one or more parameters among the remaining parameters in the DCI other than the FDRA parameter.

In this embodiment, if the third set of remaining parameters, consisting of one or more of the TDRA parameter, MCS parameter, VRB-to-PRB mapping parameter, TPC parameter, and timing interval parameter from a transmission channel to HARQ-ACK in the DCI corresponding to the SPS configuration, indicates a FDRA parameter, then two parameters in the third set of remaining parameters are added in the RRC signaling of the SPS configuration, with one parameter associated with the first-type OFDM symbols and the other associated with the second-type OFDM symbols.

In one embodiment, the manner of determining two parameter values for one or more parameter types in the SPS configuration based on RRC signaling of the SPS configuration and/or DCI corresponding to the SPS configuration may be as follows: an original VRB-to-PRB mapping parameter in DCI corresponding to the SPS configuration indicates a VRB-to-PRB mapping parameter associated with either first-type OFDM symbols or second-type OFDM symbols, a fourth set of remaining parameters in the DCI corresponding to the SPS configuration indicates another VRB-to-PRB mapping parameter associated with either second-type OFDM symbols or first-type OFDM symbols; two parameters corresponding to parameter types in the fourth set of remaining parameters are added in RRC signaling of the SPS configuration, with one parameter associated with first-type OFDM symbols and the other associated with second-type OFDM symbols.

The fourth set of remaining parameters comprises one or more parameters among the remaining parameters in the DCI other than the VRB-to-PRB mapping parameter.

In this embodiment, if the fourth set of remaining parameters, consisting of one or more of the TDRA parameter, FDRA parameter, MCS parameter, TPC parameter, and timing interval parameter from a transmission channel to HARQ-ACK in the DCI corresponding to the SPS configuration, indicates a VRB-to-PRB mapping parameter, then two parameters in the fourth set of remaining parameters are added in the RRC signaling of the SPS configuration, with one parameter associated with the first-type OFDM symbols and the other associated with the second-type OFDM symbols.

In one embodiment, the manner of determining two parameter values for one or more parameter types in the SPS configuration based on RRC signaling of the SPS configuration and/or DCI corresponding to the SPS configuration may be as follows: an original TPC parameter in DCI corresponding to the SPS configuration indicates a TPC parameter associated with either first-type OFDM symbols or second-type OFDM symbols, a fifth set of remaining parameters in the DCI corresponding to the SPS configuration indicates another TPC parameter associated with either second-type OFDM symbols or first-type OFDM symbols; two parameters corresponding to parameter types in the fifth set of remaining parameters are added in RRC signaling of the SPS configuration, with one parameter associated with first-type OFDM symbols and the other associated with second-type OFDM symbols. The fifth set of remaining parameters comprises one or more parameters among the remaining parameters in the DCI other than the TPC parameter; or

In this embodiment, if the fifth set of remaining parameters, consisting of one or more of the TDRA parameter, FDRA parameter, VRB-to-PRB mapping parameter, MCS parameter, and timing interval parameter from a transmission channel to HARQ-ACK in the DCI corresponding to the SPS configuration, indicates a TPC parameter, then two parameters in the fifth set of remaining parameters are added in the RRC signaling of the SPS configuration, with one parameter associated with the first-type OFDM symbols and the other associated with the second-type OFDM symbols.

In one embodiment, the manner of determining two parameter values for one or more parameter types in the SPS configuration based on RRC signaling of the SPS configuration and/or DCI corresponding to the SPS configuration may be as follows: an original timing interval parameter from a transmission channel to HARQ-ACK in DCI corresponding to the SPS configuration indicates a timing interval parameter from a transmission channel to HARQ-ACK associated with either first-type OFDM symbols or second-type OFDM symbols, a sixth set of remaining parameters in the DCI corresponding to the SPS configuration indicates another timing interval parameter from a transmission channel to HARQ-ACK associated with either second-type OFDM symbols or first-type OFDM symbols; two parameters corresponding to parameter types in the sixth set of remaining parameters are added in RRC signaling of the SPS configuration, with one parameter associated with first-type OFDM symbols and the other associated with second-type OFDM symbols.

The sixth set of remaining parameters comprises one or more parameters among the remaining parameters in the DCI other than the timing interval parameter from a transmission channel to HARQ-ACK.

In this embodiment, if the sixth set of remaining parameters, consisting of one or more of the TDRA parameter, FDRA parameter, VRB-to-PRB mapping parameter, TPC parameter, and MCS parameter in the DCI corresponding to the SPS configuration, indicates a timing interval parameter from a transmission channel to HARQ-ACK, then two parameters in the sixth set of remaining parameters are added in the RRC signaling of the SPS configuration, with one parameter associated with the first-type OFDM symbols and the other associated with the second-type OFDM symbols.

In one embodiment, a transmission mode or a switching mode of transmission modes of the SPS configuration is determined according to PRI and/or DAI in DCI that activates an SPS configuration.

Among others, the switching mode of transmission modes includes: the transmission mode is switched from a transmission mode in which UL transmission/DL reception may be performed in both first-type OFDM symbols and second-type OFDM symbols to a transmission mode in which UL transmission/DL reception may be performed only in first-type OFDM symbols; the transmission mode is switched from a transmission mode in which UL transmission/DL reception may be performed in both first-type OFDM symbols and second-type OFDM symbols to a transmission mode in which UL transmission/DL reception may be performed only in second-type OFDM symbols; the transmission mode is switched from a transmission mode in which UL transmission/DL reception may be performed only in first-type OFDM symbols to a transmission mode in which UL transmission/DL reception may be performed in both first-type OFDM symbols and second-type OFDM symbols; the transmission mode is switched from a transmission mode in which UL transmission/DL reception may be performed only in second-type OFDM symbols to a transmission mode in which UL transmission/DL reception may be performed in both first-type OFDM symbols and second-type OFDM symbols.

In one embodiment, the DCI is a fixed-size DCI or a variable-size DCI. Fixed-size DCI formats include DCI 1-0, DCI 0-0, and DCI 4-1; variable-size DCI formats include DCI 1-1, DCI 1-2, DCI 0-1, DCI 0-2, and DCI 4-2.

In this embodiment, for a fixed-size DCI, a parameter may be indicated by using the PRI and/or DAI in the DCI. For a variable-size DCI, one or more new parameters may be added to the DCI, such as a TDRA parameter, an FDRA parameter, a VRB-to-PRB mapping parameter, a TPC parameter, an MCS parameter, and/or a timing interval parameter from a transmission channel to HARQ-ACK.

FIG. 2 is a schematic structural diagram of a device for determining the parameters of an SPS configuration in an embodiment of the present application, as shown in FIG. 2, the device includes:

a parameter determination module 210 that is used to, in response to an SPS configuration, a device determines two parameter values for one or more parameter types in the SPS configuration, wherein the parameter types in the SPS configuration include: time-domain resource assignment (TDRA), a modulation and coding scheme (MCS), frequency-domain resource assignment (FDRA), a mapping mode from a virtual resource block (VRB) to a physical resource block (PRB), a transmission power control command (TPC), and a timing interval from a transmission channel to HARQ-ACK.

Optionally, the parameter determination module 210 is further used to:
determine a TDRA parameter according to physical uplink control channel resource indication called PRI and/or downlink assignment index (DAI) in downlink control information (DCI) corresponding to the SPS configuration, and associate the TDRA parameter with either first-type OFDM symbols or second-type OFDM symbols; repurpose an original TDRA parameter in the DCI to indicate another TDRA parameter, and associate the TDRA parameter with either the second-type OFDM symbols or the first-type OFDM symbols; or
determine a MCS parameter according to PRI and/or DAI in DCI corresponding to the SPS configuration, and associate the MCS parameter with either first-type OFDM symbols or second-type OFDM symbols; repurpose an original MCS parameter in the DCI to indicate another MCS parameter, and associate the MCS parameter with either the second-type OFDM symbols or the first-type OFDM symbols; or
determine a FDRA parameter according to PRI and/or DAI in DCI corresponding to the SPS configuration, and the FDRA parameter is used for transmission in either first-type OFDM symbols or second-type OFDM symbols; repurpose an original FDRA parameter in the DCI to indicate another FDRA parameter, and the FDRA parameter is used for transmission in either the second-type OFDM symbols or the first-type OFDM symbols; or
determine a VRB-to-PRB mapping parameter according to PRI and/or DAI in DCI corresponding to the SPS configuration, and the VRB-to-PRB mapping parameter is used for transmission in either first-type OFDM symbols or second-type OFDM symbols; repurpose an original VRB-to-PRB mapping parameter in the DCI to indicate another VRB-to-PRB mapping parameter, and the VRB-to-PRB mapping parameter is used for transmission in either the second-type OFDM symbols or the first-type OFDM symbols; or
determine a TPC parameter according to PRI and/or DAI in DCI corresponding to the SPS configuration, and associate the TPC parameter with either first-type OFDM symbols or second-type OFDM symbols; repurpose an original TPC parameter in the DCI to indicate another TPC parameter, and associate the TPC parameter with either the second-type OFDM symbols or the first-type OFDM symbols; or
determine a timing interval parameter from a transmission channel to HARQ-ACK according to PRI and/or DAI in DCI corresponding to the SPS configuration, and associate the timing interval parameter from the transmission channel to HARQ-ACK with either first-type OFDM symbols or second-type OFDM symbols; repurpose an original timing interval parameter from a transmission channel to HARQ-ACK in the DCI to indicate another timing interval parameter from a transmission channel to HARQ-ACK, and associate the timing interval parameter from the transmission channel to HARQ-ACK with either the second-type OFDM symbols or the first-type OFDM symbols.

Optionally, the parameter determination module 210 is further used to:
the PRI and/or DAI in the DCI corresponding to the SPS configuration indicates a TDRA parameter in a time-domain resource set;
   or
determine a TDRA parameter in a time-domain resource set according to an offset indicated by PRI and/or DAI in DCI corresponding to the SPS configuration, wherein the offset is an offset with respect to an original TDRA parameter in the DCI;
wherein the time-domain resource set is a time-domain resource set corresponding to first-type OFDM symbols, or a time-domain resource set corresponding to second-type OFDM symbols, or a time-domain resource set shared by both the first-type OFDM symbols and the second-type OFDM symbols.

Optionally, the parameter determination module 210 is further used to:
the PRI and/or DAI in the DCI corresponding to the SPS configuration indicates a MCS parameter in a MCS table;
   or
determine a MCS parameter in a MCS table according to an offset indicated by PRI and/or DAI in DCI corresponding to the SPS configuration, wherein the offset is an offset with respect to an original MCS parameter in the DCI;
wherein the MCS table is a MCS table corresponding to first-type OFDM symbols, or a MCS table corresponding to second-type OFDM symbols, or a MCS table shared by both the first-type OFDM symbols and the second-type OFDM symbols.

Optionally, the parameter determination module 210 is further used to:
the PRI and/or DAI in the DCI corresponding to the SPS configuration indicates a FDRA parameter;
   or
determine a FDRA parameter according to an offset indicated by PRI and/or DAI in DCI corresponding to the SPS configuration, wherein the offset is an offset with respect to an original FDRA parameter in the DCI.

Optionally, the parameter determination module 210 is further used to:
repurpose the PRI and/or DAI in the DCI corresponding to the SPS configuration to indicate a VRB-to-PRB mapping parameter.

Optionally, the parameter determination module 210 is further used to:
the PRI and/or DAI in the DCI corresponding to the SPS configuration indicates a TPC parameter in a TPC table;
   or
determine a TPC parameter in a TPC table according to an offset indicated by PRI and/or DAI in DCI corresponding to the SPS configuration, wherein the offset is an offset with respect to an original TPC parameter in the DCI;
wherein the TPC table is a TPC table corresponding to first-type OFDM symbols, or a TPC table corresponding to second-type OFDM symbols, or a TPC table shared by both the first-type OFDM symbols and the second-type OFDM symbols.

Optionally, the parameter determination module 210 is further used to:
the PRI and/or DAI in the DCI corresponding to the SPS configuration indicates a timing interval parameter from a transmission channel to HARQ-ACK in a set of timing intervals from a transmission channel to HARQ-ACK;
   or
determine, according to an offset indicated by PRI and/or DAI in DCI corresponding to the SPS configuration, a timing interval parameter from a transmission channel to HARQ-ACK in a set of timing intervals from a transmission channel to HARQ-ACK, wherein the offset is an offset with respect to an original timing interval parameter from a transmission channel to HARQ-ACK in the DCI;
wherein the set of timing intervals from a transmission channel to HARQ-ACK is a set of timing intervals from a transmission channel to HARQ-ACK corresponding to first-type OFDM symbols, or a set of timing intervals from a transmission channel to HARQ-ACK corresponding to second-type OFDM symbols, or a set of timing intervals from a transmission channel to HARQ-ACK shared by both the first-type OFDM symbols and the second-type OFDM symbols.

Optionally, the parameter determination module 210 is further used to:
determine two parameter values for one or more parameter types in the SPS configuration based on RRC signaling of the SPS configuration and/or DCI corresponding to the SPS configuration.

Optionally, the parameter determination module 210 is further used to:
configure, in RRC signaling of the SPS configuration, one TDRA parameter associated with first-type OFDM symbols and another TDRA parameter associated with second-type OFDM symbols, and denote them as a first TDRA parameter and a second TDRA parameter, respectively;
configure, in RRC signaling of the SPS configuration, one MCS parameter associated with first-type OFDM symbols and another MCS parameter associated with second-type OFDM symbols, and denote them as a first MCS parameter and a second MCS parameter, respectively;
configure, in RRC signaling of the SPS configuration, one FDRA parameter associated with first-type OFDM symbols and another FDRA parameter associated with second-type OFDM symbols, and denote them as a first FDRA parameter and a second FDRA parameter, respectively;
configure, in RRC signaling of the SPS configuration, one VRB-to-PRB mapping parameter associated with first-type OFDM symbols and another VRB-to-PRB mapping parameter associated with second-type OFDM symbols, and denote them as a first VRB-to-PRB mapping parameter and a second VRB-to-PRB mapping parameter, respectively;
configure, in RRC signaling of the SPS configuration, one TPC parameter associated with first-type OFDM symbols and another TPC parameter associated with second-type OFDM symbols, and denote them as a first TPC parameter and a second TPC parameter, respectively;
configure, in RRC signaling of the SPS configuration, one timing interval parameter from a transmission channel to HARQ-ACK associated with first-type OFDM symbols and another timing interval parameter from a transmission channel to HARQ-ACK associated with second-type OFDM symbols, and denote them as a first timing interval parameter from a transmission channel to HARQ-ACK and a second timing interval parameter from a transmission channel to HARQ-ACK, respectively.

Optionally, the parameter determination module 210 is further used to:
upon the condition that either the first TDRA parameter or the second TDRA parameter is defaulted in the RRC signaling of the SPS configuration, determine, according to the TDRA parameter in the DCI that is used to activate the SPS configuration, the defaulted first TDRA parameter or second TDRA parameter;
upon the condition that either the first TDRA parameter or the second TDRA parameter is defaulted in the RRC signaling of the SPS configuration, determine the defaulted TDRA parameter according to a TDRA parameter that is present in the RRC signaling;
upon the condition that both the first TDRA parameter and the second TDRA parameter are defaulted in the RRC signaling of the SPS configuration, determine, according to the TDRA parameter in the DCI that is used to activate the SPS configuration, the defaulted first TDRA parameter and second TDRA parameter.

Optionally, the parameter determination module 210 is further used to:
upon the condition that either the first MCS parameter or the second MCS parameter is defaulted in the RRC signaling of the SPS configuration, determine, according to the MCS parameter in the DCI that is used to activate the SPS configuration, the defaulted first MCS parameter or second MCS parameter;
upon the condition that either the first MCS parameter or the second MCS parameter is defaulted in the RRC signaling of the SPS configuration, determine the defaulted MCS parameter according to a MCS parameter that is present in the RRC signaling;
upon the condition that both the first MCS parameter and the second MCS parameter are defaulted in the RRC signaling of the SPS configuration, determining, according to the MCS parameter in the DCI that is used to activate the SPS configuration, the defaulted first MCS parameter and second MCS parameter.

Optionally, the parameter determination module 210 is further used to:
upon the condition that either the first FDRA parameter or the second FDRA parameter is defaulted in the RRC signaling of the SPS configuration, determine, according to the FDRA parameter in the DCI that is used to activate the SPS configuration, the defaulted first FDRA parameter or second FDRA parameter;
upon the condition that either the first FDRA parameter or the second FDRA parameter is defaulted in the RRC signaling of the SPS configuration, determine the defaulted FDRA parameter according to a FDRA parameter that is present in the RRC signaling;
upon the condition that both the first FDRA parameter and the second FDRA parameter are defaulted in the RRC signaling of the SPS configuration, determine, according to the FDRA parameter in the DCI that is used to activate the SPS configuration, the defaulted first FDRA parameter and second FDRA parameter.

Optionally, the parameter determination module 210 is further used to:
upon the condition that either the first VRB-to-PRB mapping parameter or the second VRB-to-PRB mapping parameter is defaulted in the RRC signaling of the SPS configuration, determine, according to the VRB-to-PRB mapping parameter in the DCI that is used to activate the SPS configuration, the defaulted first VRB-to-PRB mapping parameter or second VRB-to-PRB mapping parameter;
upon the condition that either the first VRB-to-PRB mapping parameter or the second VRB-to-PRB mapping parameter is defaulted in the RRC signaling of the SPS configuration, determining the defaulted VRB-to-PRB mapping parameter according to a VRB-to-PRB mapping parameter that is present in the RRC signaling;
upon the condition that both the first VRB-to-PRB mapping parameter and the second VRB-to-PRB mapping parameter is defaulted in the RRC signaling of the SPS configuration, determining, according to the VRB-to-PRB mapping parameter in the DCI that is used to activate the SPS configuration, the defaulted first VRB-to-PRB mapping parameter and second VRB-to-PRB mapping parameter.

Optionally, the parameter determination module 210 is further used to:
upon the condition that either the first TPC parameter or the second TPC parameter is defaulted in the RRC signaling of the SPS configuration, determine, according to the TPC parameter in the DCI that is used to activate the SPS configuration, the defaulted first TPC parameter or second TPC parameter;
upon the condition that either the first TPC parameter or the second TPC parameter is defaulted in the RRC signaling of the SPS configuration, determine the defaulted TPC parameter according to a TPC parameter that is present in the RRC signaling;
upon the condition that both the first TPC parameter and the second TPC parameter are defaulted in the RRC signaling of the SPS configuration, determine, according to the TPC parameter in the DCI that is used to activate the SPS configuration, the defaulted first TPC parameter and second TPC parameter.

Optionally, the parameter determination module 210 is further used to:
upon the condition that either the first timing interval parameter from a transmission channel to HARQ-ACK or the second timing interval parameter from a transmission channel to HARQ-ACK is defaulted in the RRC signaling of the SPS configuration, determine, according to the timing interval parameter from a transmission channel to HARQ-ACK in the DCI that is used to activate the SPS configuration, the defaulted first timing interval parameter from a transmission channel to HARQ-ACK or second timing interval parameter from a transmission channel to HARQ-ACK;
upon the condition that either the first timing interval parameter from a transmission channel to HARQ-ACK or the second timing interval parameter from a transmission channel to HARQ-ACK is defaulted in the RRC signaling of the SPS configuration, determine the defaulted timing interval parameter from a transmission channel to HARQ-ACK according to a timing interval parameter from a transmission channel to HARQ-ACK that is present in the RRC signaling;
upon the condition that both the first timing interval parameter from a transmission channel to HARQ-ACK and the second timing interval parameter from a transmission channel to HARQ-ACK are defaulted in the RRC signaling of the SPS configuration, determine, according to the timing interval parameter from a transmission channel to HARQ-ACK in the DCI that is used to activate the SPS configuration, the defaulted first timing interval parameter from a transmission channel to HARQ-ACK and second timing interval parameter from a transmission channel to HARQ-ACK.

Optionally, the parameter determination module 210 is further used to:
configure a shared TDRA parameter in RRC signaling of the SPS configuration, wherein the shared TDRA parameter is associated with both first-type OFDM symbols and second-type OFDM symbols;
configure a shared MCS parameter in RRC signaling of the SPS configuration, wherein the shared MCS parameter is associated with both first-type OFDM symbols and second-type OFDM symbols;
configure a shared FDRA parameter in RRC signaling of the SPS configuration, wherein the shared FDRA parameter is associated with both first-type OFDM symbols and second-type OFDM symbols;
configure a shared VRB-to-PRB mapping parameter in RRC signaling of the SPS configuration, wherein the shared VRB-to-PRB mapping parameter is associated with first-type OFDM symbols and second-type OFDM symbols;
configure a shared TPC parameter in RRC signaling of the SPS configuration, wherein the shared TPC parameter is associated with both first-type OFDM symbols and second-type OFDM symbols;
configure a shared timing interval parameter from a transmission channel to HARQ-ACK in RRC signaling of the SPS configuration, wherein the shared timing interval parameter from a transmission channel to HARQ-ACK is associated with both first-type OFDM symbols and second-type OFDM symbols.

Optionally, the parameter determination module 210 is further used to:
configure a shared TDRA parameter in RRC signaling of the SPS configuration includes:
upon the condition that a shared TDRA parameter is defaulted in the RRC signaling of the SPS configuration, determine, according to the TDRA parameter in the DCI that is used to activate the SPS configuration, the defaulted shared TDRA parameter;
configure a shared MCS parameter in RRC signaling of the SPS configuration includes:
   upon the condition that a shared MCS parameter is defaulted in the RRC signaling of the SPS configuration, determine, according to the MCS parameter in the DCI that is used to activate the SPS configuration, the defaulted shared MCS parameter;
   configure a shared FDRA parameter in RRC signaling of the SPS configuration includes:
      upon the condition that a shared FDRA parameter is defaulted in the RRC signaling of the SPS configuration, determine, according to the FDRA parameter in the DCI that is used to activate the SPS configuration, the defaulted shared FDRA parameter;
      configure a shared VRB-to-PRB mapping parameter in RRC signaling of the SPS configuration comprises:
         upon the condition that a shared VRB-to-PRB mapping parameter is defaulted in the RRC signaling of the SPS configuration, determining, according to the VRB-to-PRB mapping parameter in the DCI that is used to activate the SPS configuration, the defaulted shared VRB-to-PRB mapping parameter;
         configure a shared TPC parameter in RRC signaling of the SPS configuration includes:
            upon the condition that a shared TPC parameter is defaulted in the RRC signaling of the SPS configuration, determine, according to the TPC parameter in the DCI that is used to activate the SPS configuration, the defaulted shared TPC parameter;
            configure a shared timing interval parameter from a transmission channel to HARQ-ACK in RRC signaling of the SPS configuration includes:
               upon the condition that a shared timing interval parameter from a transmission channel to HARQ-ACK is defaulted in the RRC signaling of the SPS configuration, determine, according to the timing interval parameter from a transmission channel to HARQ-ACK in the DCI that is used to activate the SPS configuration, the defaulted shared timing interval parameter from a transmission channel to HARQ-ACK.

Optionally, the parameter determination module 210 is further used to:
configure, in RRC signaling of the SPS configuration, a TDRA parameter associated with either first-type OFDM symbols or a second-type OFDM symbols, the TDRA parameter in the DCI that is used to activate the SPS configuration is associated with either the second-type OFDM symbols or the first-type OFDM symbols;
configure, in RRC signaling of the SPS configuration, a MCS parameter associated with either first-type OFDM symbols or second-type OFDM symbols, the MCS parameter in the DCI that is used to activate the SPS configuration is associated with either the second-type OFDM symbols or the first-type OFDM symbols;
configure, in RRC signaling of the SPS configuration, a FDRA parameter associated with either first-type OFDM symbols or second-type OFDM symbols, the FDRA parameter in the DCI that is used to activate the SPS configuration is associated with either the second-type OFDM symbols or the first-type OFDM symbols;
configure, in RRC signaling of the SPS configuration, a VRB-to-PRB mapping parameter associated with either first-type OFDM symbols or second-type OFDM symbols, the VRB-to-PRB mapping parameter in the DCI that is used to activate the SPS configuration is associated with either the second-type OFDM symbols or the first-type OFDM symbols;
configure, in RRC signaling of the SPS configuration, a TPC parameter associated with either first-type OFDM symbols or second-type OFDM symbols, the TPC parameter in the DCI that is used to activate the SPS configuration is associated with either the second-type OFDM symbols or the first-type OFDM symbols;
configure, in RRC signaling of the SPS configuration, a timing interval parameter from a transmission channel to HARQ-ACK associated with either first-type OFDM symbols or second-type OFDM symbols, the timing interval parameter from a transmission channel to HARQ-ACK in the DCI that is used to activate the SPS configuration is associated with either the second-type OFDM symbols or the first-type OFDM symbols.

Optionally, the parameter determination module 210 is further used to:
upon the condition that the TDRA parameter is defaulted in RRC signaling of the SPS configuration, the TDRA parameter in the DCI that is used to activate the SPS configuration is associated with both the first-type OFDM symbols and the second-type OFDM symbols;
upon the condition that the MCS parameter is defaulted in RRC signaling of the SPS configuration, the MCS parameter in the DCI that is used to activate the SPS configuration is associated with both the first-type OFDM symbols and the second-type OFDM symbols;
upon the condition that the FDRA parameter is defaulted in RRC signaling of the SPS configuration, the FDRA parameter in the DCI that is used to activate the SPS configuration is associated with both the first-type OFDM symbols and the second-type OFDM symbols;
upon the condition that the VRB-to-PRB mapping parameter is defaulted in RRC signaling of the SPS configuration, the VRB-to-PRB mapping parameter in the DCI that is used to activate the SPS configuration is associated with both the first-type OFDM symbols and the second-type OFDM symbols;
upon the condition that the TPC parameter is defaulted in RRC signaling of the SPS configuration, the TPC parameter in the DCI that is used to activate the SPS configuration is associated with both the first-type OFDM symbols and the second-type OFDM symbols;
upon the condition that the timing interval parameter from a transmission channel to HARQ-ACK is defaulted in RRC signaling of the SPS configuration, the timing interval parameter from a transmission channel to HARQ-ACK in the DCI that is used to activate the SPS configuration is associated with both the first-type OFDM symbols and the second-type OFDM symbols.

Optionally, the parameter determination module 210 is further used to:
an original TDRA parameter in DCI corresponding to the SPS configuration indicates a TDRA parameter associated with either first-type OFDM symbols or second-type OFDM symbols, a first set of remaining parameters in the DCI corresponding to the SPS configuration indicates another TDRA parameter associated with either second-type OFDM symbols or first-type OFDM symbols; add, in RRC signaling of the SPS configuration, two parameters corresponding to parameter types in the first set of remaining parameters, with one parameter associated with first-type OFDM symbols and the other associated with second-type OFDM symbols, wherein the first set of remaining parameters comprises one or more parameters among the remaining parameters in the DCI other than the TDRA parameter; or
an original MCS parameter in DCI corresponding to the SPS configuration indicates a MCS parameter associated with either first-type OFDM symbols or second-type OFDM symbols, a second set of remaining parameters in the DCI corresponding to the SPS configuration indicates another MCS parameter associated with either second-type OFDM symbols or first-type OFDM symbols; add, in RRC signaling of the SPS configuration, two parameters corresponding to parameter types in the second set of remaining parameters, with one parameter associated with first-type OFDM symbols and the other associated with second-type OFDM symbols, wherein the second set of remaining parameters comprises one or more parameters among the remaining parameters in the DCI other than the MCS parameter; or
an original FDRA parameter in of DCI corresponding to the SPS configuration indicates a FDRA parameter associated with either first-type OFDM symbols or second-type OFDM symbols, a third set of remaining parameters in the of DCI corresponding to the SPS configuration indicates another FDRA parameter associated with either second-type OFDM symbols or first-type OFDM symbols; add, in RRC signaling of the SPS configuration, two parameters corresponding to parameter types in the third set of remaining parameters, with one parameter associated with first-type OFDM symbols and the other associated with second-type OFDM symbols, wherein the third set of remaining parameters comprises one or more parameters among the remaining parameters in the DCI other than the FDRA parameter; or
an original VRB-to-PRB mapping parameter in DCI corresponding to the SPS configuration indicates a VRB-to-PRB mapping parameter associated with either first-type OFDM symbols or second-type OFDM symbols, a fourth set of remaining parameters in the DCI corresponding to the SPS configuration indicates another VRB-to-PRB mapping parameter associated with either second-type OFDM symbols or first-type OFDM symbols; add, in RRC signaling of the SPS configuration, two parameters corresponding to parameter types in the fourth set of remaining parameters, with one parameter associated with first-type OFDM symbols and the other associated with second-type OFDM symbols, wherein the fourth set of remaining parameters comprises one or more parameters among the remaining parameters in the DCI other than the VRB-to-PRB mapping parameter; or
an original TPC parameter in DCI corresponding to the SPS configuration indicates a TPC parameter associated with either first-type OFDM symbols or second-type OFDM symbols, a fifth set of remaining parameters in the DCI corresponding to the SPS configuration indicates another TPC parameter associated with either second-type OFDM symbols or first-type OFDM symbols; add, in RRC signaling of the SPS configuration, two parameters corresponding to parameter types in the fifth set of remaining parameters, with one parameter associated with first-type OFDM symbols and the other associated with second-type OFDM symbols, wherein the fifth set of remaining parameters comprises one or more parameters among the remaining parameters in the DCI other than the TPC parameter; or
an original timing interval parameter from a transmission channel to HARQ-ACK in DCI corresponding to the SPS configuration indicates a timing interval parameter from a transmission channel to HARQ-ACK associated with either first-type OFDM symbols or second-type OFDM symbols, a sixth set of remaining parameters in the DCI corresponding to the SPS configuration indicates another timing interval parameter from a transmission channel to HARQ-ACK associated with either second-type OFDM symbols or first-type OFDM symbols; add, in RRC signaling of the SPS configuration, two parameters corresponding to parameter types in the sixth set of remaining parameters, with one parameter associated with first-type OFDM symbols and the other associated with second-type OFDM symbols, wherein the sixth set of remaining parameters comprises one or more parameters among the remaining parameters in the DCI other than the timing interval parameter from a transmission channel to HARQ-ACK.

Optionally, it further includes a transmission mode determination module, which is used to:
determine, according to PRI and/or DAI in DCI that activates an SPS configuration, a transmission mode or a switching mode of transmission modes of the SPS configuration.

Optionally, the DCI is a fixed-size DCI or a variable-size DCI.

Optionally, the device includes a base station or a user equipment.

In one embodiment, FIG. 3 is a schematic structural diagram of a computer device provided in an embodiment of the present application. As shown in FIG. 3, the device provided by the present application includes a processor 510 and a memory 520. The number of processors 510 in the device may be one or more, and FIG. 3 takes one processor 510 as an example. The number of memories 520 in the device may be one or more, and FIG. 3 takes one memory 520 as an example. The processor 510 and memory 520 of the device may be connected via a bus or other means, and FIG. 3 takes connection via a bus as an example. In this embodiment, the device is a computer device.

The memory 520, as a computer-readable storage medium, may be configured to store software programs, computer-executable programs and modules, such as program instructions/modules corresponding to the device of any embodiment of the present application (for example, a coding module and a first transmission module in the data transmission device). The memory 520 can include a program storage area and a data storage area, wherein the program storage area can store an operating system and an application required for at least one function; the storage data area may store data created according to the use of the device. In addition, the memory 520 can include a high-speed random access memory, and can also comprise a non-volatile memory, such as at least one disk storage device, a flash memory device or other non-volatile solid-state storage device. In some instances, the memory 520 may further includes a memory remotely disposed relative to the processor 510, and these remote memories can be connected to the device via network. Examples of the above-mentioned network include, but are not limited to, the Internet, an intranet, a local area network, a mobile communication network, and combinations thereof.

The device provided above may be configured to perform the HARQ-ACK generation method or the HARQ-ACK reception method provided in any of the above embodiments, which has corresponding functions and effects.

The programs stored in the corresponding memory 520 may be the program instructions/modules provided in the embodiments of the present application and applied to the HARQ-ACK generation method or the HARQ-ACK reception method, the processor 510 executes one or more functional applications and data processing of the computer device by running the software programs, instructions, and modules stored in the memory 520, thereby implementing the method for determining the parameters of an SPS configuration in the foregoing method embodiments. It can be understood that when the above-mentioned device acts as a receiving end, it can perform the method for determining the parameters of an SPS configuration provided in any embodiment of the present application, which has the corresponding functions and effects.

An embodiment of the present application further provides a storage medium containing computer-executable instructions, the computer-executable instructions, when executed by a computer processor, are used to perform the method for determining the parameters of an SPS configuration, the method includes: in response to an SPS configuration, a device determining two parameter values for one or more parameter types in the SPS configuration, wherein the parameter types in the SPS configuration comprise: time-domain resource assignment called TDRA, a modulation and coding scheme called MCS, frequency-domain resource assignment called FDRA, a mapping mode from a virtual resource block called VRB to a physical resource block called PRB, a transmission power control command called TPC, and a timing interval from a transmission channel to HARQ-ACK.

It will be appreciated by those skilled in the art that the term user equipment covers any suitable type of wireless user equipment, such as a mobile phone, a portable data processing device, a portable web browser or a vehicle-mounted mobile station.

**In** general, various embodiments of the present application may be implemented in hardware or dedicated circuit, software, logic or any combination thereof. For example, some aspects may be implemented in hardware, while other aspects may be implemented in firmware or software that may be executed by a controller, microprocessor or other computing device, although the present application is not limited thereto.

Embodiments of the present application may be implemented by executing computer program instructions by a data processor of a mobile device, for example in a processor entity, or by hardware, or a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

The block diagram of any logic flow in the drawings of the present application may represent program steps, or may represent interconnected logic circuits, modules and functions, or may represent a combination of program steps and logic circuits, modules and functions. A computer program may be stored in a memory. The memory may be of any type suitable for the local technical environment and may be implemented by using any suitable data storage technology, such as but not limited to, read-only memory (ROM), random access memory (RAM), optical memory devices and systems, digital video disc (DVD) or compact disk (CD), etc. The computer-readable medium may include non-transitory storage medium. The data processor may be of any type suitable for the local technical environment, such as but not limited to, general-purpose computer, special-purpose computer, microprocessor, digital signal processor (DSP), application-specific integrated circuit (ASIC), field-programmable gate array (FGPAs) and processor based on multi-core processor architecture.

The above descriptions are merely exemplary embodiments of the present application and are not intended to limit the protection scope of the present application.

Embodiments of the present application may be implemented by executing computer program instructions by a data processor of a mobile device, for example in a processor entity, or by hardware, or a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

By way of exemplary and non-limiting examples, a detailed description of exemplary embodiments of the present application has been provided above. However, in light of the accompanying drawings and claims, various modifications and adaptations to the above-described embodiments will be apparent to those skilled in the art without departing from the scope of the present application. Therefore, the proper scope of the present application will be determined according to the claims.

## Claims

1. A method for determining parameters of an SPS configuration, comprising:
in response to an SPS configuration, a device determining two parameter values for one or more parameter types in the SPS configuration, wherein the parameter types in the SPS configuration comprise: time-domain resource assignment TDRA, a modulation and coding scheme MCS, frequency-domain resource assignment FDRA, a mapping mode from a virtual resource block VRB to a physical resource block PRB, a transmission power control command TPC, and a timing interval from a transmission channel to HARQ-ACK.

2. The method according to claim 1, wherein determining two parameter values for one or more parameter types in the SPS configuration comprises at least one of the following:
determining a TDRA parameter according to physical uplink control channel resource indication PRI and/or downlink assignment index DAI in downlink control information DCI corresponding to the SPS configuration, and associating the TDRA parameter with either first-type orthogonal frequency division multiplexing OFDM symbols or second-type OFDM symbols; repurposing an original TDRA parameter in the DCI to indicate another TDRA parameter, and associating the TDRA parameter with either the second-type OFDM symbols or the first-type OFDM symbols; or
determining a MCS parameter according to PRI and/or DAI in DCI corresponding to the SPS configuration, and associating the MCS parameter with either first-type OFDM symbols or second-type OFDM symbols; repurposing an original MCS parameter in the DCI to indicate another MCS parameter, and associating the MCS parameter with either the second-type OFDM symbols or the first-type OFDM symbols; or
determining a FDRA parameter according to PRI and/or DAI in DCI corresponding to the SPS configuration, and the FDRA parameter is used for transmission in either first-type OFDM symbols or second-type OFDM symbols; repurposing an original FDRA parameter in the DCI to indicate another FDRA parameter, and the FDRA parameter is used for transmission in either the second-type OFDM symbols or the first-type OFDM symbols; or
determining a VRB-to-PRB mapping parameter according to PRI and/or DAI in DCI corresponding to the SPS configuration, and the VRB-to-PRB mapping parameter is used for transmission in either first-type OFDM symbols or second-type OFDM symbols; repurposing an original VRB-to-PRB mapping parameter in the DCI to indicate another VRB-to-PRB mapping parameter, and the VRB-to-PRB mapping parameter is used for transmission in either the second-type OFDM symbols or the first-type OFDM symbols; or
determining a TPC parameter according to PRI and/or DAI in DCI corresponding to the SPS configuration, and associating the TPC parameter with either first-type OFDM symbols or second-type OFDM symbols; repurposing an original TPC parameter in the DCI to indicate another TPC parameter, and associating the TPC parameter with either the second-type OFDM symbols or the first-type OFDM symbols; or
determining a timing interval parameter from a transmission channel to HARQ-ACK according to PRI and/or DAI in DCI corresponding to the SPS configuration, and associating the timing interval parameter from the transmission channel to HARQ-ACK with either first-type OFDM symbols or second-type OFDM symbols; repurposing an original timing interval parameter from a transmission channel to HARQ-ACK in the DCI to indicate another timing interval parameter from a transmission channel to HARQ-ACK, and associating the timing interval parameter from the transmission channel to HARQ-ACK with either the second-type OFDM symbols or the first-type OFDM symbols.

3. The method according to claim 2, wherein determining a TDRA parameter according to PRI and/or DAI in DCI corresponding to the SPS configuration comprises at least one of the following:
the PRI and/or DAI in the DCI corresponding to the SPS configuration indicates a TDRA parameter in a time-domain resource set;
or
determining a TDRA parameter in a time-domain resource set according to an offset indicated by PRI and/or DAI in DCI corresponding to the SPS configuration, wherein the offset is an offset with respect to an original TDRA parameter in the DCI;
wherein the time-domain resource set is a time-domain resource set corresponding to first-type OFDM symbols, or a time-domain resource set corresponding to second-type OFDM symbols, or a time-domain resource set shared by both the first-type OFDM symbols and the second-type OFDM symbols.

4. The method according to claim 2, wherein determining a MCS parameter according to PRI and/or DAI in DCI corresponding to the SPS configuration comprises at least one of the following:
the PRI and/or DAI in the DCI corresponding to the SPS configuration indicates a MCS parameter in a MCS table;
or
determining a MCS parameter in a MCS table according to an offset indicated by PRI and/or DAI in DCI corresponding to the SPS configuration, wherein the offset is an offset with respect to an original MCS parameter in the DCI;
wherein the MCS table is a MCS table corresponding to first-type OFDM symbols, or a MCS table corresponding to second-type OFDM symbols, or a MCS table shared by both the first-type OFDM symbols and the second-type OFDM symbols.

5. The method according to claim 2, wherein determining a FDRA parameter according to PRI and/or DAI in DCI corresponding to the SPS configuration comprises at least one of the following:
the PRI and/or DAI in the DCI corresponding to the SPS configuration indicates a FDRA parameter;
or
determining a FDRA parameter according to an offset indicated by PRI and/or DAI in DCI corresponding to the SPS configuration, wherein the offset is an offset with respect to an original FDRA parameter in the DCI.

6. The method according to claim 2, wherein determining a VRB-to-PRB mapping parameter according to PRI and/or DAI in DCI corresponding to the SPS configuration comprises at least one of the following:
repurposing the PRI and/or DAI in the DCI corresponding to the SPS configuration to indicate a VRB-to-PRB mapping parameter.

7. The method according to claim 2, wherein determining a TPC parameter according to PRI and/or DAI in DCI corresponding to the SPS configuration comprises at least one of the following:
the PRI and/or DAI in the DCI corresponding to the SPS configuration indicates a TPC parameter in a TPC table;
or
determining a TPC parameter in a TPC table according to an offset indicated by PRI and/or DAI in DCI corresponding to the SPS configuration, wherein the offset is an offset with respect to an original TPC parameter in the DCI;
wherein the TPC table is a TPC table corresponding to first-type OFDM symbols, or a TPC table corresponding to second-type OFDM symbols, or a TPC table shared by both the first-type OFDM symbols and the second-type OFDM symbols.

8. The method according to claim 2, wherein determining a timing interval parameter from a transmission channel to HARQ-ACK according to PRI and/or DAI in DCI corresponding to the SPS configuration comprises at least one of the following:
the PRI and/or DAI in the DCI corresponding to the SPS configuration indicates a timing interval parameter from a transmission channel to HARQ-ACK in a set of timing intervals from a transmission channel to HARQ-ACK;
or
determining, according to an offset indicated by PRI and/or DAI in DCI corresponding to the SPS configuration, a timing interval parameter from a transmission channel to HARQ-ACK in a set of timing intervals from a transmission channel to HARQ-ACK, wherein the offset is an offset with respect to an original timing interval parameter from a transmission channel to HARQ-ACK in the DCI;
wherein the set of timing intervals from a transmission channel to HARQ-ACK is a set of timing intervals from a transmission channel to HARQ-ACK corresponding to first-type OFDM symbols, or a set of timing intervals from a transmission channel to HARQ-ACK corresponding to second-type OFDM symbols, or a set of timing intervals from a transmission channel to HARQ-ACK shared by both the first-type OFDM symbols and the second-type OFDM symbols.

9. The method according to claim 1, wherein determining two parameter values for one or more parameter types in the SPS configuration comprises:
determining two parameter values for one or more parameter types in the SPS configuration based on radio resource control RRC signaling of the SPS configuration and/or DCI corresponding to the SPS configuration.

10. The method according to claim 9, wherein determining two parameter values for one or more parameter types in the SPS configuration based on RRC signaling of the SPS configuration and/or DCI corresponding to the SPS configuration comprises at least one of the following:
configuring, in RRC signaling of the SPS configuration, one TDRA parameter associated with first-type OFDM symbols and another TDRA parameter associated with second-type OFDM symbols, and denoting them as a first TDRA parameter and a second TDRA parameter, respectively;
configuring, in RRC signaling of the SPS configuration, one MCS parameter associated with first-type OFDM symbols and another MCS parameter associated with second-type OFDM symbols, and denoting them as a first MCS parameter and a second MCS parameter, respectively;
configuring, in RRC signaling of the SPS configuration, one FDRA parameter associated with first-type OFDM symbols and another FDRA parameter associated with second-type OFDM symbols, and denoting them as a first FDRA parameter and a second FDRA parameter, respectively;
configuring, in RRC signaling of the SPS configuration, one VRB-to-PRB mapping parameter associated with first-type OFDM symbols and another VRB-to-PRB mapping parameter associated with second-type OFDM symbols, and denoting them as a first VRB-to-PRB mapping parameter and a second VRB-to-PRB mapping parameter, respectively;
configuring, in RRC signaling of the SPS configuration, one TPC parameter associated with first-type OFDM symbols and another TPC parameter associated with second-type OFDM symbols, and denoting them as a first TPC parameter and a second TPC parameter, respectively;
configuring, in RRC signaling of the SPS configuration, one timing interval parameter from a transmission channel to HARQ-ACK associated with first-type OFDM symbols and another timing interval parameter from a transmission channel to HARQ-ACK associated with second-type OFDM symbols, and denoting them as a first timing interval parameter from a transmission channel to HARQ-ACK and a second timing interval parameter from a transmission channel to HARQ-ACK, respectively.

11. The method according to claim 10, wherein configuring, in RRC signaling of the SPS configuration, one TDRA parameter associated with first-type OFDM symbols and another TDRA parameter associated with second-type OFDM symbols, and denoting them as a first TDRA parameter and a second TDRA parameter, respectively, comprises at least one of the following:
upon the condition that either the first TDRA parameter or the second TDRA parameter is defaulted in the RRC signaling of the SPS configuration, determining, according to the TDRA parameter in the DCI that is used to activate the SPS configuration, the defaulted first TDRA parameter or second TDRA parameter;
upon the condition that either the first TDRA parameter or the second TDRA parameter is defaulted in the RRC signaling of the SPS configuration, determining the defaulted TDRA parameter according to a TDRA parameter that is present in the RRC signaling;
upon the condition that both the first TDRA parameter and the second TDRA parameter are defaulted in the RRC signaling of the SPS configuration, determining, according to the TDRA parameter in the DCI that is used to activate the SPS configuration, the defaulted first TDRA parameter and second TDRA parameter.

12. The method according to claim 10, wherein configuring, in RRC signaling of the SPS configuration, one MCS parameter associated with first-type OFDM symbols and another MCS parameter associated with second-type OFDM symbols, and denoting them as a first MCS parameter and a second MCS parameter, respectively, comprises at least one of the following:
upon the condition that either the first MCS parameter or the second MCS parameter is defaulted in the RRC signaling of the SPS configuration, determining, according to the MCS parameter in the DCI that is used to activate the SPS configuration, the defaulted first MCS parameter or second MCS parameter;
upon the condition that either the first MCS parameter or the second MCS parameter is defaulted in the RRC signaling of the SPS configuration, determining the defaulted MCS parameter according to a MCS parameter that is present in the RRC signaling;
upon the condition that both the first MCS parameter and the second MCS parameter are defaulted in the RRC signaling of the SPS configuration, determining, according to the MCS parameter in the DCI that is used to activate the SPS configuration, the defaulted first MCS parameter and second MCS parameter.

13. The method according to claim 10, wherein configuring, in RRC signaling of the SPS configuration, one FDRA parameter associated with first-type OFDM symbols and another FDRA parameter associated with second-type OFDM symbols, and denoting them as a first FDRA parameter and a second FDRA parameter, respectively, comprises at least one of the following:
upon the condition that either the first FDRA parameter or the second FDRA parameter is defaulted in the RRC signaling of the SPS configuration, determining, according to the FDRA parameter in the DCI that is used to activate the SPS configuration, the defaulted first FDRA parameter or second FDRA parameter;
upon the condition that either the first FDRA parameter or the second FDRA parameter is defaulted in the RRC signaling of the SPS configuration, determining the defaulted FDRA parameter according to a FDRA parameter that is present in the RRC signaling;
upon the condition that both the first FDRA parameter and the second FDRA parameter are defaulted in the RRC signaling of the SPS configuration, determining, according to the FDRA parameter in the DCI that is used to activate the SPS configuration, the defaulted first FDRA parameter and second FDRA parameter.

14. The method according to claim 10, wherein configuring, in RRC signaling of the SPS configuration, one VRB-to-PRB mapping parameter associated with first-type OFDM symbols and another VRB-to-PRB mapping parameter associated with second-type OFDM symbols, and denoting them as a first VRB-to-PRB mapping parameter and a second VRB-to-PRB mapping parameter, respectively comprises at least one of the following:
upon the condition that either the first VRB-to-PRB mapping parameter or the second VRB-to-PRB mapping parameter is defaulted in the RRC signaling of the SPS configuration, determining, according to the VRB-to-PRB mapping parameter in the DCI that is used to activate the SPS configuration, the defaulted first VRB-to-PRB mapping parameter or second VRB-to-PRB mapping parameter;
upon the condition that either the first VRB-to-PRB mapping parameter or the second VRB-to-PRB mapping parameter is defaulted in the RRC signaling of the SPS configuration, determining the defaulted VRB-to-PRB mapping parameter according to a VRB-to-PRB mapping parameter that is present in the RRC signaling;
upon the condition that both the first VRB-to-PRB mapping parameter and the second VRB-to-PRB mapping parameter are defaulted in the RRC signaling of the SPS configuration, determining, according to the VRB-to-PRB mapping parameter in the DCI that is used to activate the SPS configuration, the defaulted first VRB-to-PRB mapping parameter and second VRB-to-PRB mapping parameter.

15. The method according to claim 10, wherein configuring, in RRC signaling of the SPS configuration, one TPC parameter associated with first-type OFDM symbols and another TPC parameter associated with second-type OFDM symbols, and denoting them as a first TPC parameter and a second TPC parameter, respectively, comprises at least one of the following:
upon the condition that either the first TPC parameter or the second TPC parameter is defaulted in the RRC signaling of the SPS configuration, determining, according to the TPC parameter in the DCI that is used to activate the SPS configuration, the defaulted first TPC parameter or second TPC parameter;
upon the condition that either the first TPC parameter or the second TPC parameter is defaulted in the RRC signaling of the SPS configuration, determining the defaulted TPC parameter according to a TPC parameter that is present in the RRC signaling;
upon the condition that both the first TPC parameter and the second TPC parameter are defaulted in the RRC signaling of the SPS configuration, determining, according to the TPC parameter in the DCI that is used to activate the SPS configuration, the defaulted first TPC parameter and second TPC parameter.

16. The method according to claim 10, wherein configuring, in RRC signaling of the SPS configuration, one timing interval parameter from a transmission channel to HARQ-ACK associated with first-type OFDM symbols and another timing interval parameter from a transmission channel to HARQ-ACK associated with second-type OFDM symbols, and denoting them as a first timing interval parameter from a transmission channel to HARQ-ACK and a second timing interval parameter from a transmission channel to HARQ-ACK, respectively, comprises at least one of the following:
upon the condition that either the first timing interval parameter from a transmission channel to HARQ-ACK or the second timing interval parameter from a transmission channel to HARQ-ACK is defaulted in the RRC signaling of the SPS configuration, determining, according to the timing interval parameter from a transmission channel to HARQ-ACK in the DCI that is used to activate the SPS configuration, the defaulted first timing interval parameter from a transmission channel to HARQ-ACK or second timing interval parameter from a transmission channel to HARQ-ACK;
upon the condition that either the first timing interval parameter from a transmission channel to HARQ-ACK or the second timing interval parameter from a transmission channel to HARQ-ACK is defaulted in the RRC signaling of the SPS configuration, determining the defaulted timing interval parameter from a transmission channel to HARQ-ACK according to a timing interval parameter from a transmission channel to HARQ-ACK that is present in the RRC signaling;
upon the condition that both the first timing interval parameter from a transmission channel to HARQ-ACK and the second timing interval parameter from a transmission channel to HARQ-ACK are defaulted in the RRC signaling of the SPS configuration, determining, according to the timing interval parameter from a transmission channel to HARQ-ACK in the DCI that is used to activate the SPS configuration, the defaulted first timing interval parameter from a transmission channel to HARQ-ACK and second timing interval parameter from a transmission channel to HARQ-ACK.

17. The method according to claim 9, wherein determining two parameter values for one or more parameter types in the SPS configuration based on RRC signaling of the SPS configuration and/or DCI corresponding to the SPS configuration comprises at least one of the following:
configuring a shared TDRA parameter in RRC signaling of the SPS configuration, wherein the shared TDRA parameter is associated with first-type OFDM symbols and second-type OFDM symbols;
configuring a shared MCS parameter in RRC signaling of the SPS configuration, wherein the shared MCS parameter is associated with first-type OFDM symbols and second-type OFDM symbols;
configuring a shared FDRA parameter in RRC signaling of the SPS configuration, wherein the shared FDRA parameter is associated with first-type OFDM symbols and second-type OFDM symbols;
configuring a shared VRB-to-PRB mapping parameter in RRC signaling of the SPS configuration, wherein the shared VRB-to-PRB mapping parameter is associated with first-type OFDM symbols and second-type OFDM symbols;
configuring a shared TPC parameter in RRC signaling of the SPS configuration, wherein the shared TPC parameter is associated with first-type OFDM symbols and second-type OFDM symbols;
configuring a shared timing interval parameter from a transmission channel to HARQ-ACK in RRC signaling of the SPS configuration, wherein the shared timing interval parameter from a transmission channel to HARQ-ACK is associated with first-type OFDM symbols and second-type OFDM symbols.

18. The method according to claim 17, comprising at least one of the following:
configuring a shared TDRA parameter in RRC signaling of the SPS configuration comprises:
upon the condition that a shared TDRA parameter is defaulted in the RRC signaling of the SPS configuration, determining, according to the TDRA parameter in the DCI that is used to activate the SPS configuration, the defaulted shared TDRA parameter;
configuring a shared MCS parameter in RRC signaling of the SPS configuration comprises:
upon the condition that a shared MCS parameter is defaulted in the RRC signaling of the SPS configuration, determining, according to the MCS parameter in the DCI that is used to activate the SPS configuration, the defaulted shared MCS parameter;
configuring a shared FDRA parameter in RRC signaling of the SPS configuration comprises:
upon the condition that a shared FDRA parameter is defaulted in the RRC signaling of the SPS configuration, determining, according to the FDRA parameter in the DCI that is used to activate the SPS configuration, the defaulted shared FDRA parameter;
configuring a shared VRB-to-PRB mapping parameter in RRC signaling of the SPS configuration comprises:
upon the condition that a shared VRB-to-PRB mapping parameter is defaulted in the RRC signaling of the SPS configuration, determining, according to the VRB-to-PRB mapping parameter in the DCI that is used to activate the SPS configuration, the defaulted shared VRB-to-PRB mapping parameter;
configuring a shared TPC parameter in RRC signaling of the SPS configuration comprises:
upon the condition that a shared TPC parameter is defaulted in the RRC signaling of the SPS configuration, determining, according to the TPC parameter in the DCI that is used to activate the SPS configuration, the defaulted shared TPC parameter;
configuring a shared timing interval parameter from a transmission channel to HARQ-ACK in RRC signaling of the SPS configuration comprises:
upon the condition that a shared timing interval parameter from a transmission channel to HARQ-ACK is defaulted in the RRC signaling of the SPS configuration, determining, according to the timing interval parameter from a transmission channel to HARQ-ACK in the DCI that is used to activate the SPS configuration, the defaulted shared timing interval parameter from a transmission channel to HARQ-ACK.

19. The method according to claim 9, wherein determining two parameter values for one or more parameter types in the SPS configuration based on RRC signaling of the SPS configuration and/or DCI corresponding to the SPS configuration comprises at least one of the following:
configuring, in RRC signaling of the SPS configuration, a TDRA parameter associated with either first-type OFDM symbols or second-type OFDM symbols, the TDRA parameter in the DCI that is used to activate the SPS configuration is associated with either the second-type OFDM symbols or the first-type OFDM symbols;
configuring, in RRC signaling of the SPS configuration, a MCS parameter associated with either first-type OFDM symbols or second-type OFDM symbols, the MCS parameter in the DCI that is used to activate the SPS configuration is associated with either the second-type OFDM symbols or the first-type OFDM symbols;
configuring, in RRC signaling of the SPS configuration, a FDRA parameter associated with either first-type OFDM symbols or second-type OFDM symbols, the FDRA parameter in the DCI that is used to activate the SPS configuration is associated with either the second-type OFDM symbols or the first-type OFDM symbols;
configuring, in RRC signaling of the SPS configuration, a VRB-to-PRB mapping parameter associated with either first-type OFDM symbols or second-type OFDM symbols, the VRB-to-PRB mapping parameter in the DCI that is used to activate the SPS configuration is associated with either the second-type OFDM symbols or the first-type OFDM symbols;
configuring, in RRC signaling of the SPS configuration, a TPC parameter associated with either first-type OFDM symbols or second-type OFDM symbols, the TPC parameter in the DCI that is used to activate the SPS configuration is associated with either the second-type OFDM symbols or the first-type OFDM symbols;
configuring, in RRC signaling of the SPS configuration, a timing interval parameter from a transmission channel to HARQ-ACK associated with either first-type OFDM symbols or second-type OFDM symbols, the timing interval parameter from a transmission channel to HARQ-ACK in the DCI that is used to activate the SPS configuration is associated with either the second-type OFDM symbols or the first-type OFDM symbols.

20. The method according to claim 19, comprising at least one of the following:
upon the condition that the TDRA parameter is defaulted in RRC signaling of the SPS configuration, the TDRA parameter in the DCI that is used to activate the SPS configuration is associated with both the first-type OFDM symbols and the second-type OFDM symbols;
upon the condition that the MCS parameter is defaulted in RRC signaling of the SPS configuration, the MCS parameter in the DCI that is used to activate the SPS configuration is associated with both the first-type OFDM symbols and the second-type OFDM symbols;
upon the condition that the FDRA parameter is defaulted in RRC signaling of the SPS configuration, the FDRA parameter in the DCI that is used to activate the SPS configuration is associated with both the first-type OFDM symbols and the second-type OFDM symbols;
upon the condition that the VRB-to-PRB mapping parameter is defaulted in RRC signaling of the SPS configuration, the VRB-to-PRB mapping parameter in the DCI that is used to activate the SPS configuration is associated with both the first-type OFDM symbols and the second-type OFDM symbols;
upon the condition that the TPC parameter is defaulted in RRC signaling of the SPS configuration, the TPC parameter in the DCI that is used to activate the SPS configuration is associated with both the first-type OFDM symbols and the second-type OFDM symbols;
upon the condition that the timing interval parameter from a transmission channel to HARQ-ACK is defaulted in RRC signaling of the SPS configuration, the timing interval parameter from a transmission channel to HARQ-ACK in the DCI that is used to activate the SPS configuration is associated with both the first-type OFDM symbols and the second-type OFDM symbols.

21. The method according to claim 9, wherein determining two parameter values for one or more parameter types in the SPS configuration based on RRC signaling of the SPS configuration and/or DCI corresponding to the SPS configuration comprises at least one of the following:
an original TDRA parameter in DCI corresponding to the SPS configuration indicates a TDRA parameter associated with either first-type OFDM symbols or second-type OFDM symbols, a first set of remaining parameters in the DCI corresponding to the SPS configuration indicates another TDRA parameter associated with either second-type OFDM symbols or first-type OFDM symbols; in RRC signaling of the SPS configuration, two parameters corresponding to parameter types in the first set of remaining parameters are added, with one parameter associated with first-type OFDM symbols and the other associated with second-type OFDM symbols, wherein the first set of remaining parameters comprises one or more parameters among the remaining parameters in the DCI other than the TDRA parameter; or
an original MCS parameter in DCI corresponding to the SPS configuration indicates a MCS parameter associated with either first-type OFDM symbols or second-type OFDM symbols, a second set of remaining parameters in the DCI corresponding to the SPS configuration indicates another MCS parameter associated with either second-type OFDM symbols or first-type OFDM symbols; in RRC signaling of the SPS configuration, two parameters corresponding to parameter types in the second set of remaining parameters are added, with one parameter associated with first-type OFDM symbols and the other associated with second-type OFDM symbols, wherein the second set of remaining parameters comprises one or more parameters among the remaining parameters in the DCI other than the MCS parameter; or
an original FDRA parameter in of DCI corresponding to the SPS configuration indicates a FDRA parameter associated with either first-type OFDM symbols or second-type OFDM symbols, a third set of remaining parameters in the of DCI corresponding to the SPS configuration indicates another FDRA parameter associated with either second-type OFDM symbols or first-type OFDM symbols; in RRC signaling of the SPS configuration, two parameters corresponding to parameter types in the third set of remaining parameters are added, with one parameter associated with first-type OFDM symbols and the other associated with second-type OFDM symbols, wherein the third set of remaining parameters comprises one or more parameters among the remaining parameters in the DCI other than the FDRA parameter; or
an original VRB-to-PRB mapping parameter in DCI corresponding to the SPS configuration indicates a VRB-to-PRB mapping parameter associated with either first-type OFDM symbols or second-type OFDM symbols, a fourth set of remaining parameters in the DCI corresponding to the SPS configuration indicates another VRB-to-PRB mapping parameter associated with either second-type OFDM symbols or first-type OFDM symbols; in RRC signaling of the SPS configuration, two parameters corresponding to parameter types in the fourth set of remaining parameters are added, with one parameter associated with first-type OFDM symbols and the other associated with second-type OFDM symbols, wherein the fourth set of remaining parameters comprises one or more parameters among the remaining parameters in the DCI other than the VRB-to-PRB mapping parameter; or
an original TPC parameter in DCI corresponding to the SPS configuration indicates a TPC parameter associated with either first-type OFDM symbols or second-type OFDM symbols, a fifth set of remaining parameters in the DCI corresponding to the SPS configuration indicates another TPC parameter associated with either second-type OFDM symbols or first-type OFDM symbols; in RRC signaling of the SPS configuration, two parameters corresponding to parameter types in the fifth set of remaining parameters are added, with one parameter associated with first-type OFDM symbols and the other associated with second-type OFDM symbols, wherein the fifth set of remaining parameters comprises one or more parameters among the remaining parameters in the DCI other than the TPC parameter; or
an original timing interval parameter from a transmission channel to HARQ-ACK in DCI corresponding to the SPS configuration indicates a timing interval parameter from a transmission channel to HARQ-ACK associated with either first-type OFDM symbols or second-type OFDM symbols, a sixth set of remaining parameters in the DCI corresponding to the SPS configuration indicates another timing interval parameter from a transmission channel to HARQ-ACK associated with either second-type OFDM symbols or first-type OFDM symbols; in RRC signaling of the SPS configuration, two parameters corresponding to parameter types in the sixth set of remaining parameters are added, with one parameter associated with first-type OFDM symbols and the other associated with second-type OFDM symbols, wherein the sixth set of remaining parameters comprises one or more parameters among the remaining parameters in the DCI other than the timing interval parameter from a transmission channel to HARQ-ACK.

22. The method according to claim 1, further comprising:
determining, according to PRI and/or DAI in DCI that activates an SPS configuration, a transmission mode or a switching mode of transmission modes of the SPS configuration.

23. The method according to any one of claims 2-22, wherein the DCI is a fixed-size DCI or a variable-size DCI.

24. The method according to claim 1, wherein the device comprises a base station or a user equipment.

25. A computer device, comprising a memory, a processor, and a computer program stored on the memory and executable on the processor, wherein the processor, when executing the program, implements the method for determining parameters of an SPS configuration according to any one of claims 1-24.

26. A computer-readable storage medium, storing a computer program thereon, wherein the program, when executed by a processor, implements the method for determining parameters of an SPS configuration according to any one of claims 1-24.
